# EUROPEAN PATENT APPLICATION

(11) **EP 3 951 692 A1**
(43) Date of publication of application: **09.02.2022**
(21) Application number: 20781758.6
(22) Date of filing: 27.03.2020
(51) Int. Cl.: G06Q 40/04, G06Q 40/08

(54) **DATA PROCESSING SYSTEM, DATA PROCESSING METHOD, AND PROGRAM**

(30) Priority: 29.03.2019 JP 2019067565
(71) Applicant: Sato, Michihiro, Tokyo 102-0076 (JP)
(72) Inventor: Sato, Michihiro, Tokyo 102-0076 (JP)
(74) Representative: Bockhorni & Brüntjen Partnerschaft Patentanwälte mbB
(86) International application number: PCT/JP2020/014317
(87) International publication number: WO 2020/203886

(57) **Abstract**

A calculation unit calculates an insurance premium of a security including a non-guaranteed portion and performs a process of calculating the insurance premium to be borne by a security holder according to a risk that an issuing entity becomes unable to pay interest and/or defaults. The calculation unit collects at least a portion of the interest as the insurance premium. A payment determination unit pays insurance proceeds when the issuing entity becomes unable to pay interest and/or defaults.

## Description

### TECHNICAL FIELD

The present disclosure relates to a data processing system, a data processing method, and a program for calculating the insurance premium of an insurance policy obtained by investors and the like.

### BACKGROUND ART

Patent Document 1 describes a security for acquiring private funds, in particular, a security issued to acquire private funds to be invested in public projects such as infrastructure improvements. This security has a debt portion and an investment portion and is also guaranteed (0% < guaranteed rate < 100%). When this security is redeemed, the amount corresponding to the face value is returned. The security pays interest like ordinary bonds and also pays dividends according to the performance like stock certificates. On the other hand, if the project operator becomes unable to pay interest or defaults, the guarantor will return the amount guaranteed to the investor, although the full amount is not returned. The system described in Patent Document 1 facilitates the operations of changing the security to a security of a different type and issuing a new security, which are performed to continue the project when a predetermined period has passed after the security is issued.

### PRIOR ART DOCUMENT

### Patent Document

Patent Document 1: International Publication No. 2015/133419

### SUMMARY OF THE INVENTION

### Problems that the Invention is to Solve

To efficiently acquire funds by issuing securities such as those described in Patent Document 1, the safety of the security holders in terms of the invested money needs to be increased also for the non-guaranteed portions, which are not guaranteed.

Securities such as those described in Patent Document 1 involve a guarantor that pays, although not the full amount, the guaranteed money guaranteed to the investors for the guaranteed portion when the project operator becomes unable to pay interest or defaults. It is necessary to ensure that the guarantor can pay the guaranteed money to the security holders when the project operator becomes unable to pay interest or defaults.

Furthermore, when the profit to the project operator is guaranteed even when the project becomes unsuccessful, the project operator is more likely to use the security to raise funds. Means for Solving the Problems

It is an objective of the present disclosure to provide a data processing system, a data processing method, and a program that are novel and can easily calculate, taking various circumstances into consideration, the insurance premium of an insurance policy that is obtained by an investor for the non-guaranteed portion of a security.

It is also an objective of the present disclosure to provide a data processing system, a data processing method, and a program that can easily calculate, taking various circumstances into consideration, the insurance premium of an insurance policy that is obtained by a guarantor for the guaranteed portion of a security.

It is also an objective of the present disclosure to provide a data processing system, a data processing method, and a program that can easily calculate, taking various circumstances into consideration, the insurance premium of an insurance policy that guarantees a profit to a project operator.

According to one aspect of the present disclosure, a system is provided that calculates an insurance premium of a security for acquiring funds for a project. The security includes: a content of the project; an issuing entity that issues the security; a face value to be paid to the issuing entity in exchange for possession of the security; a guaranteed rate that specifies an amount to be returned to the security holder by at least one third party involved in the issuance of the security when the issuing entity becomes unable to pay interest and/or defaults, where the guaranteed rate is expressed as a proportion relative to the face value; an interest rate that specifies interest to be paid periodically to the security holder, where the interest rate is expressed as a proportion relative to the face value or to a guaranteed portion that is guaranteed with the guaranteed rate; and a dividend that is to be distributed to the security holder after the project funded through the security begins to create profit, where the dividend is at least a portion of the profit and paid on a non-guaranteed portion other than the guaranteed portion. The data processing system calculates the insurance premium for the non-guaranteed portion of the security. Specifically, the data processing system includes a calculation unit configured to perform a process of calculating the insurance premium to be borne by the security holder according to a risk that the issuing entity becomes unable to pay interest and/or defaults, where the calculation unit is configured to collect at least a portion of the interest or the dividend as the insurance premium; and a payment determination unit configured to determine whether the issuing entity has become unable to pay interest and/or defaulted and to pay insurance proceeds to the security holder when the issuing entity has become unable to pay interest and/or defaulted. According to the above configuration, an insurance policy can be provided that is obtained by the security holder for the non-guaranteed portion of the security. At least a portion of the interest or the dividend can be allocated to the insurance premium.

According to one aspect of the present disclosure, the security may be one of a plurality of securities each issued for one of a plurality of projects, the insurance policy may be an insurance policy for a group of the securities and pays, when the issuing entity of a security of the securities becomes unable to pay interest and/or defaults, insurance proceeds to the security holder of the security. That is, the insurance policy may be an insurance policy for each security (for each project), or an insurance policy may be provided for a group of securities (projects). When an insurance policy is provided for the group, the number of people who obtain the insurance policy increases, and the risk is diversified. Accordingly, the insurance premium can be set low.

According to one aspect of the present disclosure, the data processing system may include an information publication unit configured to publish a project plan of the project for which funds are acquired by issuing the security on a web page before the security is issued, where the information publication unit may be configured to perform a process of managing the number of views of the web page or a viewing time of the web page. The calculation unit may be configured to perform a process of setting the insurance premium lower when the number of views is greater or when the viewing time is longer. A security that has a higher number of views or longer viewing time has a higher level of attention and popularity, indicating that the project funded through the security has a high level of attention and popularity and a lower risk of becoming unsuccessful. Thus, the calculation unit can set the insurance premium taking into consideration the number of views and the viewing time of the web page, and can set the insurance premium lower when the number of views is greater or when the viewing time is longer.

According to one aspect of the present disclosure, the information publication unit may be configured to publish a project state on the web page at predetermined periods after the security is issued. The number of views of the web page or the viewing time in which the web page is viewed may be managed at the predetermined periods. The calculation unit may be configured to perform a process of setting the insurance premium lower when the number of views is greater or when the viewing time is longer. A security that has a larger number of views or longer viewing time even after the security is issued has a high level of attention and popularity. It can thus be assumed that the project has a lower risk of becoming unsuccessful. As such, the calculation unit can set the insurance premium taking into consideration the number of views or the viewing time of the web page, and can set the insurance premium lower when the number of views is greater.

According to one aspect of the present disclosure, the calculation unit may have a table that associates the number of views or the viewing time with a factor for calculating the insurance premium, and the factor is set such that the insurance premium is lower when the number of views is greater or the viewing time is longer. This allows the insurance premium to be easily calculated by referring to the table and selecting the factor corresponding to the number of views or the viewing time.

According to one aspect of the present disclosure, the data processing system may include an information publication unit configured to publish a project plan of the project for which funds are acquired by issuing the security on a web page before the security is issued, and a survey unit configured to perform a process of conducting a survey on approval or disapproval of the project plan on the web page. In this case, the calculation unit may be configured to perform a process of setting the insurance premium lower when the number of positive responses to the project plan is greater or when the project plan has a higher reputation.

When the survey unit performs a process of conducting a preliminary survey on approval or disapproval of the project for which funds are raised by issuing the security, the opinions of local residents on the project can be obtained. When the result of the survey indicates a large number of positive opinions about the project, it can be assumed that the risk of the project becoming unsuccessful is low. The calculation unit can set the insurance premium taking into consideration the survey result and set the insurance premium lower when the number of positive opinions is greater.

According to one aspect of the present disclosure, the information publication unit may be configured to publish a project state on the web page at predetermined periods after the security is issued, and the survey unit may be configured to perform a process of conducting a survey on the reputation of the project on the web page at predetermined periods. In this case, the calculation unit may be configured to perform a process of setting the insurance premium lower when the reputation is higher. A security that has a high reputation even after the security is issued has a high level of attention and popularity. It can thus be assumed the project has a lower risk of becoming unsuccessful. Accordingly, the calculation unit can set the insurance premium taking into consideration the reputation and set the insurance premium lower when the reputation is higher.

According to one aspect of the present disclosure, the calculation unit may have a table that associates a result of the survey with a factor for calculating the insurance premium, and the factor is set such that the insurance premium is lower when the number of positive responses or the reputation is higher. This allows the insurance premium to be easily calculated by referring to the table and selecting the factor corresponding to the number of positive responses or the reputation.

According to one aspect of the present disclosure, the calculation unit may be configured to, when the project plan is created based on a plan proposal content of a proposal created by a party that has tendered for the project through proposal competitive bidding, perform a process of multiplying by a factor that sets the insurance premium lower. When the project plan is based on the plan proposal content submitted in bidding that evaluates the contents of proposals instead of the prices, it can be assumed that the project has a lower risk of becoming unsuccessful. Thus, the calculation unit can set the insurance premium taking into consideration the project plan and set the insurance premium lower when the rating is higher.

According to one aspect of the present disclosure, the data processing system may further include a project operator computer, the project operator computer may be configured to assign a first hash value of a data file relating to the project, and the information publication unit may be configured to calculate a second hash value of the provided data file, compare the first hash value with the second hash value, and publish information in the data file when the first and second hash values agree with each other. This increases the reliability of the information published on the web page and the data published for the survey.

According to one aspect of the present disclosure, the data processing system may further include a comprehensive information management unit, the information publication unit may be configured to assign an electronic signature to data including the number of views or the viewing time and provide the data to the comprehensive information management unit, and the comprehensive information management unit may be configured to provide the data including the number of views or the viewing time to the calculation unit to calculate the insurance premium. This increases the reliability of the data for calculating the insurance premium.

According to one aspect of the present disclosure, the data processing system may further include a comprehensive information management unit, the information publication unit may be configured to assign an electronic signature to data including a result of the survey and provide the data to the comprehensive information management unit, and the comprehensive information management unit may be configured to provide the data including the result of the survey to the calculation unit to calculate the insurance premium. This increases the reliability of the data for calculating the insurance premium.

According to one aspect of the present disclosure, the data processing system may further include a comprehensive information management unit, a project operator computer may be configured to assign an electronic signature to data including information on bidding and provide the data to the comprehensive information management unit, and the comprehensive information management unit may be configured to provide the data including the information on the bidding to the calculation unit to calculate the insurance premium. This increases the reliability of the data for calculating the insurance premium.

According to one aspect of the present disclosure, the insurance premium and the information used to calculate the insurance premium may be stored in a blockchain. This allows the information for calculating insurance premiums to be safely managed.

According to one aspect of the present disclosure, the information used to calculate the insurance premium includes a project plan of the project for which funds are acquired by issuing the security, a project state, the number of views or a viewing time of a web page that publishes the project plan or the project state, a result of a survey on approval or disapproval of the project plan, and a result of a survey on the reputation of the project.

According to one aspect of the present disclosure, a data processing system is provided that calculates the insurance premium of an insurance policy that is obtained by a guarantor that pays a guaranteed portion of a security to a security holder according to a guaranteed rate. The insurance policy is an insurance policy for payment of guaranteed money calculated with the guaranteed rate. The data processing system includes: a calculation unit configured to perform a process of calculating the insurance premium to be borne by the guarantor according to a risk that the issuing entity becomes unable to pay interest and/or defaults; and a payment determination unit configured to determine whether the issuing entity has become unable to pay interest and/or defaulted and to pay insurance proceeds to the guarantor when the issuing entity has become unable to pay interest and/or defaulted. According to the above configuration, an insurance policy is provided that is obtained by the guarantor for the guaranteed portion according to the guaranteed rate.

According to one aspect of the present disclosure, a data processing system is provided that calculates an insurance premium of an insurance policy that is obtained by a project operator of a project for which funds are acquired through a security. The insurance policy is an insurance policy that guarantees a profit to the project operator. The data processing system includes: a calculation unit configured to perform a process of calculating the insurance premium to be borne by the project operator according to a risk that the issuing entity becomes unable to pay interest and/or defaults or a risk that an expected profit is not obtained; and a payment determination unit configured to determine whether the issuing entity has become unable to pay interest and/or defaulted or whether the expected profit has been obtained, and to pay insurance proceeds to the project operator when the issuing entity has become unable to pay interest and/or defaulted or when the expected profit has not been obtained. According to the above configuration, an insurance policy is provided that is obtained by the project operator and guarantees at least a portion of the expected profit.

According to the present disclosure, a data processing system having the above configuration, a data processing method performed by the system, and a program installed on a computer that performs the method are provided.

### Effects of the Invention

The present disclosure facilitates the calculation of the insurance premium of an insurance policy for the non-guaranteed portion of a security. The present disclosure facilitates the calculation of an insurance premium of an insurance policy for a guarantor. The present disclosure also facilitates the calculation of an insurance premium of an insurance policy for a project operator.

### BRIEF DESCRIPTION OF THE DRAWINGS

Fig. 1 is a diagram showing the structure of a security.
Fig. 2 is a diagram showing a security.
Fig. 3 is a diagram showing the structure of an insurance policy for the non-guaranteed portions of securities, illustrating a case in which one insurance policy is provided for a group of multiple types of securities.
Fig. 4 is a diagram showing the structure of an insurance policy for the non-guaranteed portion of a security, illustrating a case in which an insurance policy is provided for one type of security.
Fig. 5 is a flowchart showing a procedure of a project for which funds are acquired through securities.
Fig. 6 is a block diagram of a data processing system.
Fig. 7 is a diagram showing a computer configuration.
Fig. 8 is a diagram showing a database that manages issued securities.
Fig. 9 is a diagram showing a database that manages security holders.
Fig. 10 is a diagram showing the structure of web pages that publicize securities and their projects.
Fig. 11 is a diagram showing another example of the structure of a web page that publicizes securities and their projects.
Fig. 12 is a diagram showing a table that associates the number of views with a factor by which a base insurance premium is multiplied.
Fig. 13 is a diagram showing a table that associates a result of a survey conducted before issuing the security with a factor by which a base insurance premium is multiplied.
Fig. 14 is a diagram showing a table that associates a result of a survey conducted after issuing the security with a factor by which a base insurance premium is multiplied.
Fig. 15 is a diagram illustrating components used to calculate the final insurance premium.
Fig. 16 is a flowchart showing the process from the announcement of a project plan to the start of the project.
Fig. 17 is a flowchart subsequent to Fig. 16.
Fig. 18 is a flowchart showing the process performed after the project is started.
Fig. 19 is a flowchart subsequent to Fig. 18.
Fig. 20 is a flowchart for selecting a payment method for the insurance premium.
Fig. 21 is a flowchart showing a process of uploading data from a project operator computer to a comprehensive management computer.
Fig. 22 is a flowchart showing a process of the comprehensive management computer subsequent to Fig. 21.
Fig. 23 is a flowchart showing a process of uploading from the comprehensive management computer to a certification organization computer.
Fig. 24 is a diagram showing a progress management database.
Fig. 25 is a flowchart showing the process of storing insurance premium data in a blockchain.
Fig. 26 is a flowchart showing the process of storing the trading history of a security in a blockchain.
Fig. 27 is a diagram showing the configuration of an insurance policy for a guarantor that guarantees the guaranteed portion of a security.
Fig. 28 is a diagram showing the configuration of an insurance policy for a project operator that acquires funds through a security.

### MODES FOR CARRYING OUT THE INVENTION

Referring to the drawings, a data processing system according to an embodiment is now described.

### [First Embodiment]

### [Description of Securities]

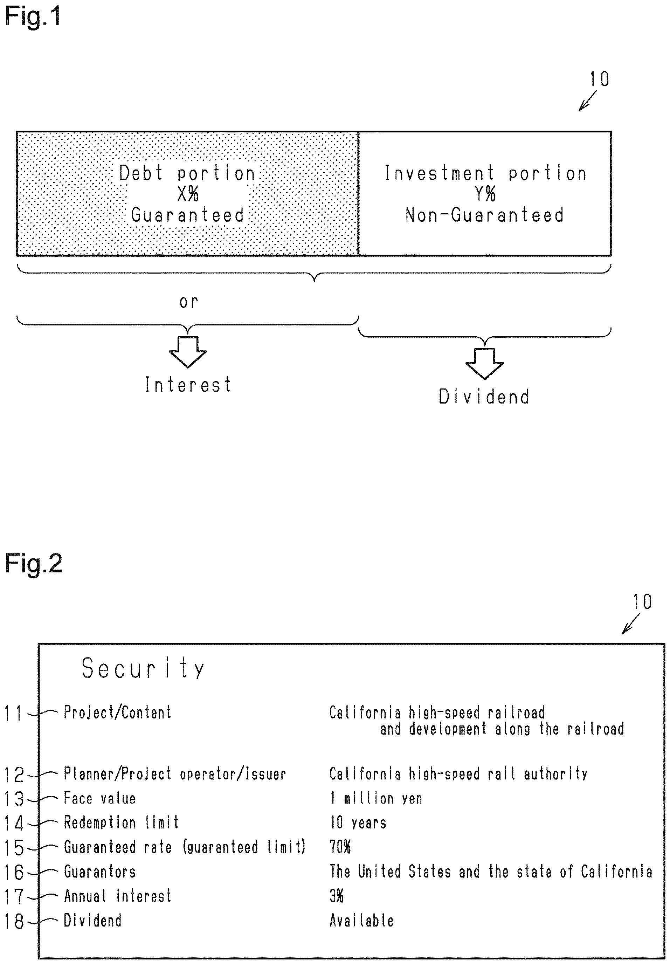

Referring to Figs. 1 and 2, a security 10 includes the title and content 11 of the project that uses the funds raised with the security 10, a planner/project operator/issuer 12 that plans the project and issues the security 10, a face value 13 that is paid to the issuer of the security 10 in exchange for the possession of the security 10, and a redemption limit 14 of the issued security 10. The security 10 further includes a guaranteed rate (guaranteed limit) 15, which specifies the amount to be returned to the security holder by at least one third party that is involved in the issuance of the security 10 if the issuing entity becomes unable to pay interest and/or defaults. The guaranteed rate (guaranteed limit) 15 is expressed as a proportion relative to the face value 13. The security 10 also includes a guarantor 16, which guarantees the guaranteed amount. Furthermore, the security 10 includes an annual interest (interest rate) 17, which specifies the interest to be paid periodically to the security holder and is expressed as a proportion relative to the face value 13 or to the guaranteed portion that is guaranteed with the guaranteed rate, and a dividend 18, which is to be paid to the security holder on the non-guaranteed portion other than the guaranteed portion guaranteed with the guaranteed rate 15. The security 10 differs from bonds such as corporate bonds and national bonds in that the security 10 is partially guaranteed, that the acquired funds are used for the specified purpose, and that the security 10 pays the dividend 18 like stock certificates. On the other hand, the security 10 is similar to bonds in that the security 10 has a redemption limit and pays the interest.

For example, with the security 10, X% of the face value 13 (0% < X < 100%) represents the debt portion that is owed by the project operator and also the guaranteed portion that is guaranteed by a third party guarantor, such as a national or local government. Y% of the face value 13 (face value - debt portion (guaranteed portion)) represents the investment portion for the investor and also the non-guaranteed portion ("risk portion" for investors) that will not be returned if the issuing entity becomes unable to pay interest and/or defaults. The annual interest (interest rate) 17 is specified as a proportion relative to the face value 13 or to the guaranteed portion. The guarantor 16 may be a private company or a public-private consolidation, as well as a national or local government.

As long as the project operates smoothly, the security 10 pays the interest to the investor, who is the buyer of the security 10, every year according to the interest rate (annual interest) 17 until the redemption limit is reached. In addition, the security 10 pays the dividend as a share of profit. When the redemption limit is reached, the amount corresponding to the face value (1 million yen) is returned. If the project fails and causes the project operator 12 or the like to default and/or become unable to pay interest before the redemption limit is reached, the guarantor 16 will return the guaranteed limit of X% (0.7 million yen). This security 10 is partially guaranteed, facilitating the acquisition of funds from investors. The security 10 is thus suitable to raise funds for a new public project. The security 10 also includes the non-guaranteed portion, which encourages the security holder to actively participate in the project in hopes of success of the project and higher dividends. The annual interest (interest rate) 17 may be fixed or variable. Furthermore, in addition to the face value 13, the fixed or variable interest, which is paid periodically, may be guaranteed with a similar rate. For example, 70% of the interest (3% of the face value) of the year in which payment of interest is failed may be guaranteed. The securities 10 may be issued irrespective of the number, sizes, or types of the projects to be funded, provided that the guarantor 16 can guarantee. The security 10 does not have to have a redemption limit or the dividend 18.

Fig. 2 shows an example of a security 10 for a high-speed railroad project. In the example of Fig. 2, the contents are California high-speed railroad and development along the railroad, the planner/project operator/issuer 12 is the California High-Speed Rail Authority, the face value 13 is 1 million yen, the redemption limit 14 is ten years, the guaranteed rate (guaranteed limit) 15 that is guaranteed by the guarantors 16, which are the Unite States and the state of California, is 70%, and the interest rate (annual interest) 17 is 3%.

The security 10 has features of bonds and stock certificates. The security 10 is similar to bonds in that it pays interest and similar to stock certificates in that it pays dividends. Also, the security 10 is similar to bonds in that it has a redemption limit. The security 10 differs from stock certificates in that it does not grant the security holder a position equivalent to those of stockholders.

With the security 10, even if payment of the interest defined in writting becomes impossible, the guaranteed amount corresponding to the given rate is returned to the investors, or the buyers. This makes investors feel more secure and thus facilitates the acquisition of project funds by the project operator. Moreover, since the security 10 is guaranteed, its market price in securities markets is less likely to decrease significantly. If the price of the security 10 increases in securities markets, the investor can earn a profit on sale. On the other hand, the national or local government that plans a public project is not obliged to guarantee the full face value when the project fails. This facilitates the acquisition of funds through the security 10. In particular, the security 10, in which the full face value 13 is not guaranteed, helps a national or local government in a tight financial condition to acquire funds through the security 10. The security 10, which facilitates the acquisition of funds from investors, is suitable for raising funds for a new public project. The security 10 includes a non-guaranteed portion and pays a dividend 18. This motivates the security holder to help achieve success of the project, increasing the chance of success.

### [Description of Insurance Policy for Security Holder]

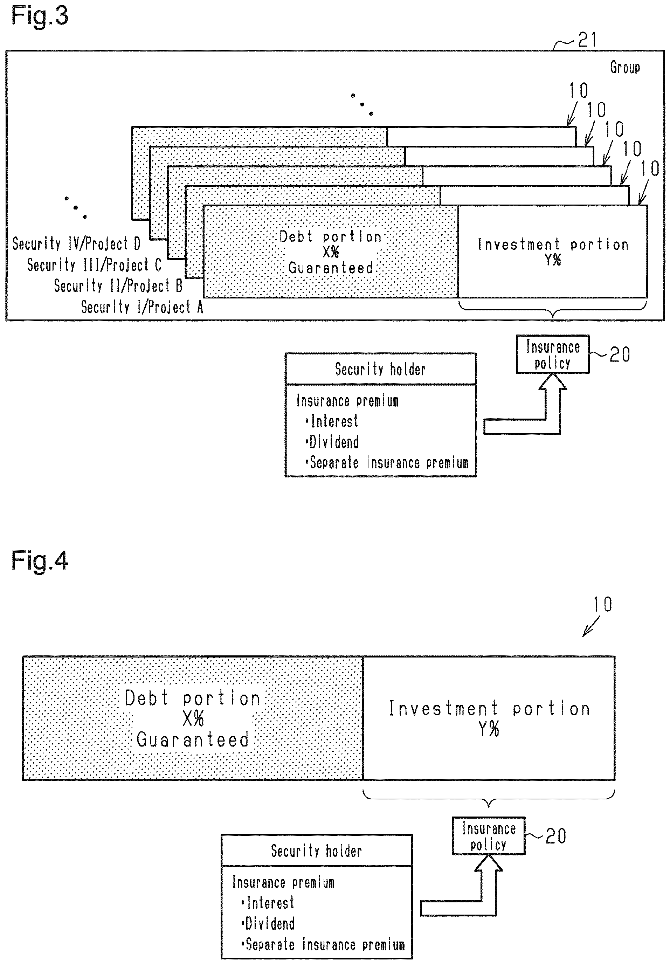

As shown in Fig. 3, multiple types of securities 10 are issued for different projects. For example, Security I is for raising funds for Project A, Security II is for raising funds for Project B, Security III is for raising funds for Project C, and Security IV is for raising funds for Project D. Each of Securities I to IV has a non-guaranteed portion (Y%). The non-guaranteed portion is the portion that the security holder, or the investor, loses if the issuing entity becomes unable to pay interest and/or defaults. Against the loss caused in such situations, an insurance system may be provided that collects money (insurance premiums) from a large number of security holders and uses the funds to pay money (insurance proceeds) to the security holders who have suffered the loss. Such an insurance system reduces the risk for the security holders and facilitates the acquisition of funds through the securities 10.

One insurance policy 20 may be provided for a group 21 of multiple types of securities 10. The security holders of Securities I to IV may obtain the insurance policy 20. All or a portion of the interest of the annual interest (interest rate) 17 received by each of the security holders of Securities I to IV is allocated to the insurance premium. Alternatively, in place of or in addition to the interest, all or a portion of the dividend 18 is allocated to the insurance premiums. Furthermore, if the annual interest (interest rate) 17 and the dividend 18 are not enough to cover the insurance premium, the insured additionally pays for the insurance premium. If the insured does not wish to pay the full amount of the insurance premium with the annual interest (interest rate) 17 or dividend 18, or if the insured does not wish to use the annual interest (interest rate) 17 or dividend 18 to pay any part of the insurance premium, the insurance premium is paid separately.

The securities of the group 21 may be for projects that are related to one another or for unrelated projects. For example, projects that are related may be projects in developments along a railroad in which a theme park is constructed in one place along the railroad and an academic city, including a university and residential areas for example, is developed in another place along the railroad. Such related projects help to increase the population along the railroad and provide easy access to the theme park for the residents of the academic city. As such, when the group 21 includes securities 10 for related projects, the projects of the group 21 are more likely to be successful in association with one another.

As shown in Fig. 4, instead of setting one insurance policy 20 for one group 21 of multiple types of securities 10, an insurance policy 20 may be set for a security 10 for one project. In this case, the insurance premium for an induvial security 10 can be easily calculated. That is, for each security 10, the insurance premium can be calculated according to the risk that the issuing entity becomes unable to pay interest and/or defaults.

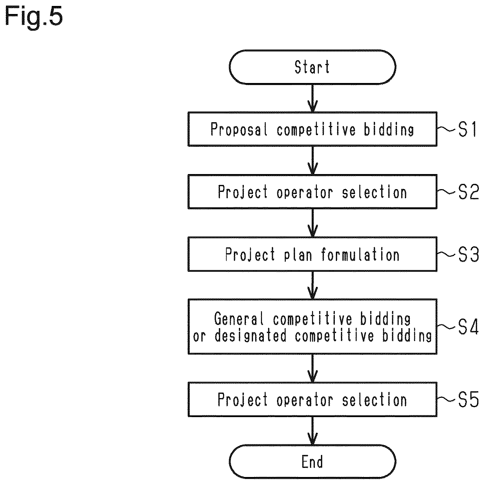

As shown in Fig. 5, the budget of a project for which funds are raised through a security 10 is set based on a plan made by the project operator or the like. At step S1, to make the plan more concrete, proposal competitive bidding is conducted. Proposal competitive bidding is a system to invite an unspecified number of companies to submit proposals on a specified theme within a budget specified by the ordering party, and the company with the most suitable proposal is selected as the contract partner. In proposal competitive bidding, not only the price but also the contents of the proposal are evaluated. At step S2, one or more companies are selected based on the price and the contents of the proposal.

This proposal competitive bidding may be repeated multiple times to make the project plan concrete in stages. For example, the bidding may be conducted by presenting the details of the requirements regarding technology and facilities on a website in order to invite applicants from the public to participate in a proposal competition. The bidding may also be general competitive bidding, in which criteria such as the safety of the project, consideration to the surrounding environment, and the nature of the project are comprehensively evaluated to select a successful bidder that is most advantageous to the ordering party.

At step S3, the selected contractor and the project operator formulate a project plan. Instead of going through proposal competitive bidding or the like at step S1, the plan of the project for which funds are raised through the securities 10 may be formulated by the project operator. At step S4, general competitive bidding or designated competitive bidding is conducted to start the construction. At step S5, a project operator is selected. The general competitive bidding may use a comprehensive evaluation system or an automatic bidding system in which a successful bidder is determined based only on the price.

### [Description of Data Processing System]

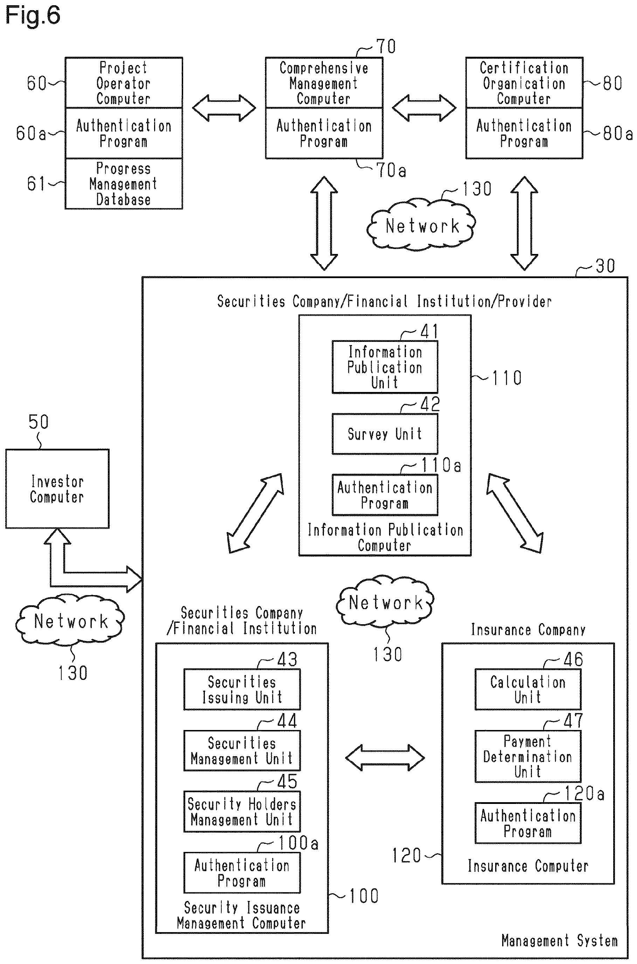

As shown in Fig. 6, the data processing system, which manages the issuance of an insurance policy 20 and securities 10, for example, includes a management system 30, which manages the securities 10 and the insurance policy 20. The data processing system also includes an investor computer 50, which accesses the management system 30. The data processing system further includes a project operator computer 60, which is managed by a project operator that conducts a project funded through a security 10, a comprehensive management computer 70, which comprehensively manages the securities 10 issued for various projects and the insurance policy 20, and a certification organization computer 80, which manages reference data on the securities 10 and the insurance policy 20.

The management system 30 includes a security issuence management computer 100, which manages securities 10 to be issued, an information publication computer 110, which publishes information about securities 10, and an insurance computer 120, which manages the insurance policy 20. A network 130 interconnects these computers 50, 60, 70, 80, 100, 110, and 120.

The computers 50, 60, 70, 80, 100, 110, 120 may distribute computation over multiple computers and processors. The network may include a private communication line or a public communication line that is used as a virtual private network (virtual private communication line). For example, the Internet Virtual Private Network (VPN) may be used that encapsulates and transmits encrypted data via the Internet using a protocol such as Point to Point Tunneling Protocol (PPTP) or Secure Sockets Layer (SSL). Alternatively, a private network offered by an Internet service provider (ISP) or a CATV network may be used.

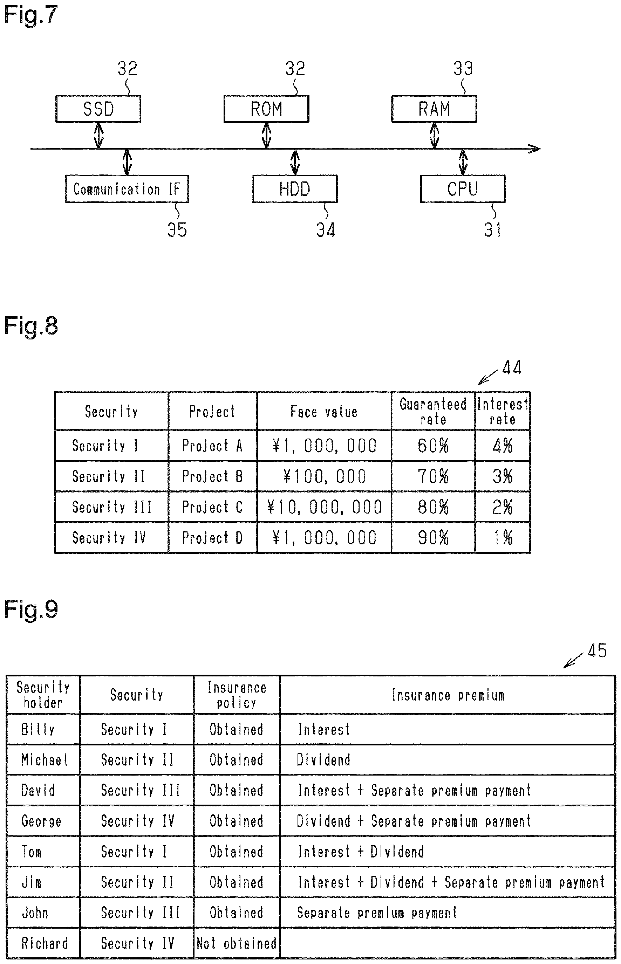

As shown in Fig. 7, the computers 50, 60, 70, 80, 100, 110, and 120 each include a CPU 31, ROM 32, RAM 33, a hard disk drive (HDD) 34, a solid state drive (SSD) 36, and a communication interface 35. The computers 50, 60, 70, 80, 100, 110, 120 may be high-function, high-performance computers such as workstations, general personal computers, or small information processing terminals or personal computers such as smartphones. The functions of computers 50, 60, 70, 80, 100, 110, and 120 are performed by computer programs installed in hardware resources. Some of the data may be stored in the cloud.

### [Description of Investor Computer]

The investor computer 50 can connect to the management system 30 via a network 130 and send, to the security issuence management computer 100 of the management system 30, a purchase order for securities 10 that are planned to be or are already on the market through a web page on the Internet or a program of a streaming service. The investor computer 50 can also send a sell order for securities 10 to the security issuence management computer 100. As the investor computer 50, an institutional investor may use a high-performance computer, such as workstation, and a private investor may use a portable or smaller information processing terminal, such as a general desktop computer, a laptop computer, a smartphone, and a cellular telephone. Alternatively, a digital television receiver with a data communication function may be used. The investor computer 50 can view the latest information on securities 10 and their projects by accessing the information publication computer 110 of the management system 30.

### [Description of Project Operator Computer]

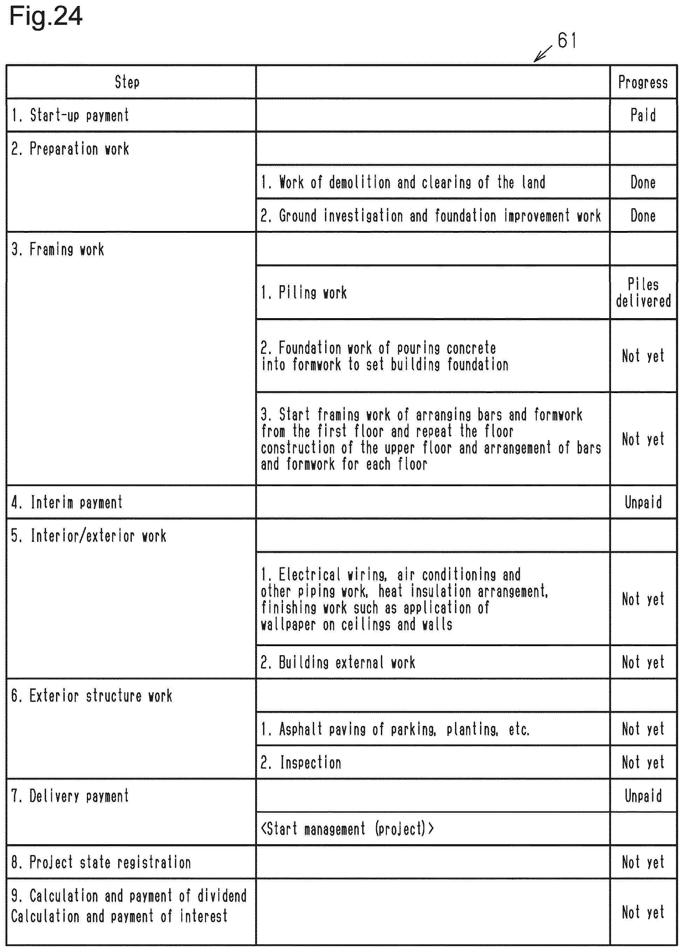

The project operator computer 60 is a computer system such as a workstation that exchanges data with other computers via a network 130 and performs various processes with a processor such as a CPU. The project operator computer 60 may be managed by a project manager to manage the entire project in charge. For example, the project operator computer 60 may include a progress management database 61 for managing the progress of the project. In the project planning stage, the project operator computer 60 determines, based on individual data, the approximate amount of funds required for each project, the approximate length of the construction period for each project, the approximate amount of funds required for all projects combined, and the like. The progress management database 61 also manages proposal competitive bidding for formulating a project plan (step S1) and a general competitive bidding or designated competitive bidding for selecting contractors for the construction work (step S4), and the like. When the construction work of the project starts, the project operator computer 60 manages the progress state of the construction work (for example, material delivery state, construction work progress state). When the construction work has been completed and the project has started (e.g., the theme park has opened and started operation), the project operator computer 60 manages the financial state data of each year (see Fig. 24).

### [Description of Comprehensive Management Computer]

The comprehensive management computer 70 is a computer system such as a workstation that comprehensively manages the securities project and performs various processes with a processor such as a CPU. The comprehensive management computer 70 establishes a secure line with the project operator computer 60 and receives data on projects. The project operator computer 60 and the comprehensive management computer 70 are installed with authentication programs 60a and 70a approved by the certification organization that manages the certification organization computer 80, and establish a secure line using a cryptographic means such as the Secure Shell (SSH) public key system. The data that the comprehensive management computer 70 receives from the project operator computer 60 is used to publish project information for investors with the information publication computer 110 and also reflected in the calculation of the insurance premium of the insurance policy 20 for the non-guaranteed portion of the security 10.

### [Description of Certification Organication Computer]

The certification organization computer 80, together with the comprehensive management computer 70, functions as a comprehensive information management unit that comprehensively manages the data handled by the data processing system.

The certification organization computer 80 is a computer system such as a workstation that is managed by a certification organization and performs various processes with a processor such as a CPU. The certification organization computer 80 establishes a secure line with the comprehensive management computer 70 and receives data on projects sent from the project operator computer 60 to the comprehensive management computer 70. It also receives data such as the trading history of securities 10 created by the security issuence management computer 100 via the comprehensive management computer 70. The certification organization computer 80 also receives data on the number of web page views and survey results created by the information publication computer 110 via the comprehensive management computer 70. Furthermore, data such as the insurance premium of the insurance policy 20 calculated by the insurance computer 120 is received via the comprehensive management computer 70. The certification organization computer 80 may provide these sets of data to computers 60, 100, 110, 120 upon request via the comprehensive management computer 70. The data provided here has been authenticated by the certification organization. For example, via the comprehensive management computer 70, the certification organization computer 80 provides data on project plans and project states to the information publication computer, and also provides the number of web page views and survey results to the insurance computer 120 for the calculation of insurance premiums.

The certification organization computer 80 is also installed with an authentication program 80a approved by the certification organization, and establishes a secure line using the SSH public key system or other cryptographic means. The certification organization computer 80 provides public keys to be used when the computers 60, 70, 100, 110, 120 are receiving ends of data, and also verifies whether a public key is authentic when it is used. Public keys may be provided by another certification organization computer, and the verification may also be performed by another certification organization computer. A secure line may also be established by quantum cryptography, such as quantum key distribution. Quantum cryptography allows two communicating users to detect the presence of any eavesdropper trying to gain knowledge of the key. The certification organization computer 80 manages the data sent from the comprehensive management computer 70 as reference data. For example, the certification organization computer 80 centrally manages the data sent from the comprehensive management computer 70 as reference data in a secure manner using a blockchain or tamper-resistant storage. The comprehensive management computer 70 and the certification organization computer 80 may serve as a comprehensive information management unit with their functions combined.

Quantum cryptography, such as quantum key distribution, may also be used between the project operator computer 60 and the comprehensive management computer 70, between the security issuence management computer 100 and the comprehensive management computer 70, between the information publication computer 110 and the comprehensive management computer 70, and between the insurance computer 120 and the comprehensive management computer 70.

### [Description of Management System]

The management system 30 includes the security issuence management computer 100, which manages securities 10 to be issued, the information publication computer 110, which publishes information about securities 10, and the insurance computer 120, which manages the insurance policy 20. These computers are interconnected via a network 130.

### [Description of Security Issuance Management Computer]

The security issuence management computer 100 is managed by a securities company or a financial institution that sells securities 10. The security issuence management computer 100 functionally includes securities issuing unit 43, a securities management unit 44, and a security holders management unit 45 and performs processes of these units with a processor such as a CPU.

The securities issuing unit 43 receives purchase order data from the investor computer 50 for a security 10 that has been published by the information publication computer 110. In some cases, the securities 10 may also be sold and purchased in new trading markets such as stock markets and bond markets. In this case, the securities issuing unit 43 may receive sell order data from the investor computer 50. When receiving purchase order data for a security 10 published by the information publication computer 110 from the investor computer 50, the securities issuing unit 43 issues a security 10 to the investor who has sent the purchase order data. The securities issuing unit 43 provides the trading history of the security 10 to the certification organization computer 80 via the comprehensive management computer 70.

The securities management unit 44 is a database that manages the issued securities 10. As shown in Fig. 8, the securities management unit 44 manages the project, face value, guaranteed rate, and interest rate for each security 10. For example, the securities management unit 44 manages that Security I, which is one of the securities 10, is a security for Project A and has a face value of 1,000,000 yen, a guaranteed rate of 60%, and an interest rate of 4%. With Security I, a 40% portion is the non-guaranteed portion and is the portion covered by the insurance policy 20. The managed securities may include a security that is not guaranteed, does not pay interest, and only pays dividends, a security that is guaranteed, only pays interest, and does not pay dividends, and a security that is not guaranteed and pays both interest and dividends.

The security holders management unit 45 is a database that manages security holders. As shown in Fig. 9, the security holders management unit 45 manages, for each security holder, the type of security 10, whether the security holder has the insurance policy, and the method of payment of insurance premiums. This insurance policy 20 is for the non-guaranteed portion of each security 10 and may be an insurance policy 20 for the group 21 of multiple types of securities 10 (Fig. 3) or an insurance policy 20 for one type of security (Fig. 4). All or a portion of the interest of the annual interest (interest rate) 17 received by the security holder of the security 10 is allocated to the payment of the insurance premium. Alternatively, in place of or in addition to the interest, all or a portion of the dividend 18 is allocated to the insurance premium. Furthermore, if the annual interest (interest rate) 17 and the dividend 18 are not enough to pay the insurance premium, the insured additionally pays for the insurance premium. If the insured does not wish to pay the full amount of the insurance premium with the annual interest (interest rate) 17 or dividend 18, or if the insured does not wish to use the annual interest (interest rate) 17 or dividend 18 to pay any part of the insurance premium, the insurance premium is paid separately. The security holders management unit 45 manages the type of insurance premium payment for each security holder. The insurance premium may be paid in a lump sum for the period until the redemption of the security 10, or paid annually or monthly. The interest and dividends of securities 10 are paid annually, and thus the insurance premium is preferably paid annually.

The security issuence management computer 100 is installed with an authentication program 100a and establishes a secure line with the comprehensive management computer 70 using the SSH public key system or other cryptographic means. The security issuence management computer 100 may send data on the trading history of securities 10 to the certification organization computer 80 via the security issuence management computer 100 periodically or in response to a request from the security issuence management computer 100.

### [Description of Information Publication Computer]

The information publication computer 110, which serves as an information publication unit, is a computer managed by a securities company or a financial institution that sells securities 10, or by a provider such as an Internet service provider. It may also be a computer managed by a company providing services relating to search engines, online advertising, cloud computing, software, or hardware, for example. The information publication computer 110 includes an information publication unit 41 and a survey unit 42 and performs processes of these units with a processor such as a CPU.

The information publication unit 41 publishes information about the plans on the projects for which funds are acquired through securities 10 and the securities 10 being offered for sale. Specifically, various pieces of information including the project plans and the securities 10 may be published by the information publication unit 41 via web pages and programs of the financial institutions and securities companies that offer the securities 10 for sale. For example, project plans and securities 10 may be published using text data, image data, and video data. For example, investors can access a web page where investors can purchase securities by entering their account information (user ID and password) to log onto the page from investor computers 50. For example, the information publication unit 41 and the investor computer 50 are connected via a network 130 such as the Internet. The information publication unit 41 and the investor computer 50 may be connected using a secure protocol such as Secure Sockets Layer (SSL), which combines security techniques such as the SSH public key system to prevent eavesdropping and falsification of data and spoofing.

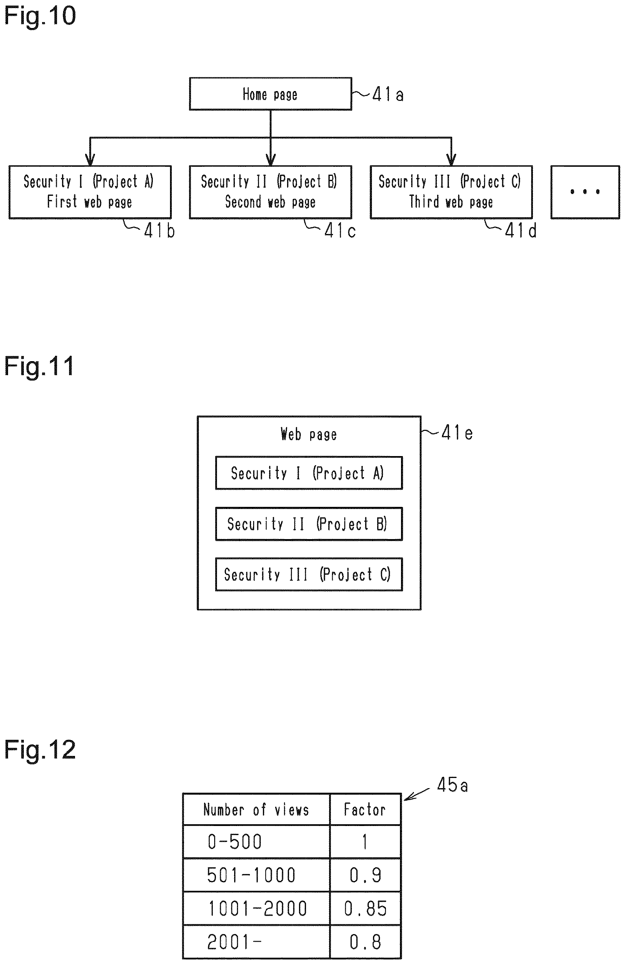

As shown in Fig. 10, a website for securities 10 includes a home page 41a and first to third web pages 41b to 41d, which are located below and linked to the home page 41a to publicize individual securities 10 and projects. The individual securities 10 and their projects published on the first to third web pages 41b to 41d may be projects that are related to one another or unrelated projects. The first to third web pages 41b to 41d linked to the home page 41a may form one group 21 for the insurance policy 20.

As shown in Fig. 11, one web page 41e may publicize multiple securities 10 and their projects. The securities 10 and their projects publicized on one web page 41e may be projects related to one another or unrelated projects. In the configuration shown in Fig. 11, there may be multiple web pages 41e, and each web page 41e may publicize multiple securities 10 and their projects. The securities 10 and their projects publicized on one web page 41e may form one group 21.

The information publication unit 41 checks which of the web pages of securities 10 is accessed by each logged-in investor to count and manage the number of views at predetermined periods. The information publication unit 41 also manages logs such as viewing start date and time and viewing end date and time. It is thus possible to know which project plans and projects are attracting more attention. Specifically, before a security 10 is issued, the information publication unit 41 publishes the project plan of the project to be funded by issuing the security 10 on a web page, and manages the number of web page views within a predetermined period. After the security 10 is issued and the construction work of the project has started, the information publication unit 41 publishes the progress of the construction work and the like on a web page as the project state, and manages the number of web page views within a predetermined period. After the start of the project (for example, after the opening of a theme park), the information publication unit 41 may publish annual financial state data on a web page and manages the number of web page views within a predetermined period. The data published on these web pages is provided from the project operator computer 60 to the comprehensive management computer 70 and the certification organization computer 80, and is obtained by the information publication computer 110 from the certification organization computer 80 via the comprehensive management computer 70.

As described in detail below, each of the data files provided from the project operator computer 60 to the comprehensive management computer 70 and the certification organization computer 80 is assigned a hash value calculated by the project operator computer 60 (step S77 described below). When publishing the data of a data file derived from data provided by the project operator computer 60, the information publication unit 41 calculates and compares a hash value to determine whether the data file has been rewritten. That is, when the hash values agree with each other, the data in the data file is published on a web page, and when they do not agree with each other, the data is either not published or published after checking the authenticity of its contents. In this manner, accurate information is provided to investors and the like who view the web page.

The number of web page views is reflected in the insurance premium of the insurance policy 20 for the non-investment portion of securities 10. For example, in the example of Fig. 10, the number of views of each of the first web page 41b to the third web page 41d, which publicize the respective securities 10 and their projects, is managed, and the total number of views, which is the sum of the numbers of views of these web pages, is managed. In the example of Fig. 11, the number of views of the web page 41e is managed. The information publication unit 41 also calculates the viewing time from the viewing start date and time and viewing end date and time.

The survey unit 42 performs a process of conducting a survey on approval or disapproval of the project plan of the project to be funded by issuing a security 10. For example, when a theme park including a shopping mall is to be built in a predetermined area by raising funds with a security 10, the survey unit 42 performs a process of conducting, on a web page, a survey on approval or disapproval of the construction of the theme park based on the published project plan or the like. For example, when the survey shows that many local residents approve the construction of the theme park or the theme park construction has a high reputation, the theme park is more likely to be commercially successful after its construction. The result of such a survey on approval or disapproval of the project plan is reflected in the insurance premium of the insurance policy 20 for the non-investment portion of the security 10. The survey may also ask for opinions on how to make the theme park more attractive, for example, what kind of commercial stores the theme park should have.

After the security is issued, the survey unit 42 performs a process of conducting a survey on the reputation of the project state, such as the progress of construction work and the project operation. For example, during the construction of a theme park, matters that affect the credibility of the theme park after its opening are examined, such as whether the noise level of the construction work is below the standard level, and whether the construction work is causing any nuisance or pollution. Then, the survey unit 42 performs a process of conducting a survey on the reputation of the theme park construction work. After the theme park opens, a survey on the reputation regarding visits to the theme park is conducted asking whether the visit to the theme park was satisfactory or enjoyable (e.g., likability rating and satisfaction rating). The higher the reputation indicated by the survey result, the higher the likelihood that the theme park will be commercially successful. The result of such a survey on approval or disapproval of the project state is reflected in the insurance premium of the insurance policy 20 for the non-investment portion, which is the portion covered by the insurance policy, of the security 10.

After the security 10 is issued, a survey may be conducted at predetermined periods, such as every year, every six months, every three months, or every month. The result of the survey on the reputation of the project state is reflected in the insurance premium of the insurance policy 20 for the non-investment portion of the security 10.

The data for conducting surveys as described above is also published on a web page by the information publication unit 41. In other words, such data is created based on data provided by the project operator computer 60, authenticated by the certification organization, and provided by the certification organization computer 80. Furthermore, the data published on the web page has been subjected to checking for alteration using hash values, for example when the data is provided from the project operator computer 60 and when it is published. Thus, the published data is highly reliable.

### [Description of Insurance Computer]

The insurance computer 120 manages the insurance policy 20. The insurance computer 120 functionally includes a calculation unit 46 and a payment determination unit 47 and performs processes of these units with a processor such as a CPU.

The calculation unit 46 calculates the insurance premium of the insurance policy 20. The insurance premium is calculated taking into consideration the number of views of the web page on the security 10 managed by the information publication unit 41. That is, a security 10 with a higher number of views has a higher level of attention and popularity, resulting in a higher possibility of commercial success of the project funded through the security 10. For this reason, the calculation unit 46 multiplies the insurance premium by a factor corresponding to the number of views of the web page that publishes the different types of securities 10 of the group 21, for example. The factor is set to a value that lowers the insurance premium when the number of views is greater.

The number of views is the number of views of the web page that publicizes the projects of the securities 10 forming the group 21, which is covered by the insurance policy 20. For example, when a web page is provided for each security 10 (for each project), the number of views is the total number of views of the web pages of the respective securities 10 (projects) forming the group 21 (in the example of Fig. 10). When the securities 10 of the group 21 are publicized on one or more web pages, the number of views is the number of views of the one or more web pages (in the example of Fig. 11).

In place of or in addition to the number of views, the total viewing time of the web pages in a predetermined period may be used to calculate the insurance premium. The total viewing time is the sum of the durations in which the web pages are viewed on accessing terminals. The total viewing time may be used for the calculation because it can be assumed that a longer total viewing time suggests a higher level of attention and popularity and therefore a higher possibility of commercial success of the projects funded through the securities 10.

As shown in Fig. 12, the calculation unit 46 has a table 45a that associates the number of views with a factor, and selects the factor corresponding to the number of views by referring to the table 45a. The insurance premium calculated before a security 10 is issued using the factor corresponding to the number of views of the web page that publishes the project plan may be the insurance premium at the time of the issuance of the security. The insurance premium calculated after the security 10 is issued using the factor corresponding to the number of views of the web page publishing the construction work state or the financial state after the opening of the project (e.g., after the opening of a theme park) may be used when the insurance premium is reviewed at predetermined periods, for example.

As for the factors corresponding to the numbers of web page views, a table 45a may be provided that selects the factor corresponding to the number of views for each of the different types of securities 10 (different projects), so that the factor for the corresponding security 10 is used. That is, the factor may be different among different types of securities 10 (different projects). The table 45a may also be a table that associates the viewing time with a factor.

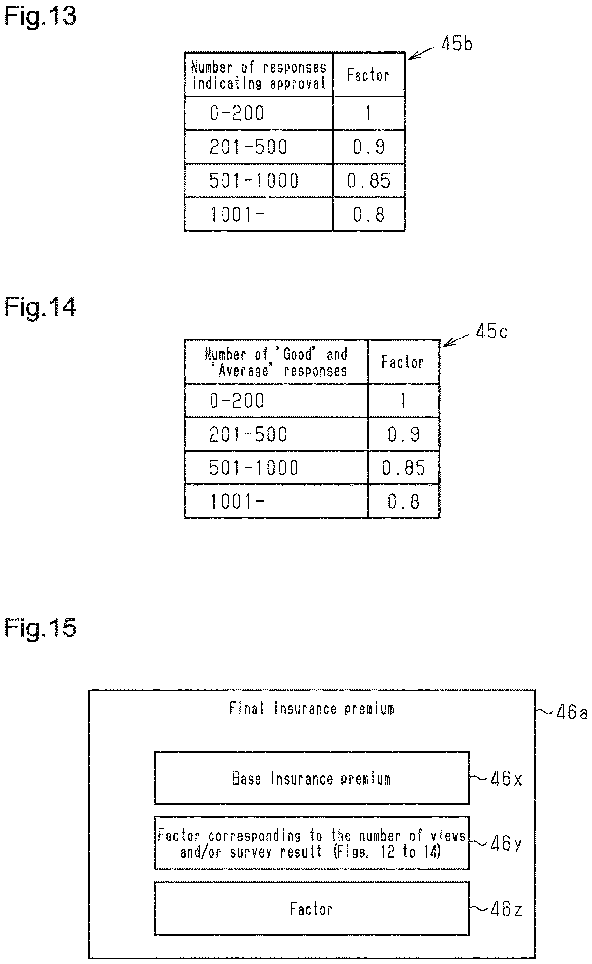

As shown in Fig. 13, the calculation unit 46 calculates the insurance premium by taking into consideration the result of the survey of the survey unit 42. That is, before a security 10 is issued, the insurance premium is multiplied by the factor corresponding to the number of responses indicating approval obtained in a survey on approval or disapproval of the project based on the project plan. The factor is set to a value that lowers the insurance premium when the number of responses indicating approval is greater. This is because a higher number of responses indicating approval increases the likelihood that the project will be commercially successful and lowers the likelihood that insurance proceeds will be paid. The calculation unit 46 has a table 45b that associates the number of responses indicating approval with a factor, and selects the factor corresponding to the number of responses indicating approval by referring to this table 45b. The insurance premium calculated before a security 10 is issued using the factor corresponding to the number of responses indicating approval in a survey based on the project plan may be used when the security is issued.

When a survey on the reputation of the project is conducted at predetermined periods after the security is issued, the insurance premium is multiplied by the factor corresponding to the reputation. The factor is set to a value that lowers the insurance premium when the reputation is higher. For example, as shown in Fig. 14, when a survey is conducted with three scales of "good," "average," and "bad," the number of "good" and "average" responses is counted, and the factor corresponding to the number of counts is selected by referring to the table. This is because a higher reputation increases the likelihood that the project will be commercially successful and lowers the likelihood that insurance proceeds will be paid. Alternatively, only the number of "good" responses may be counted to select the factor corresponding to the number of counts by referring to the table. Also, a scale of 1 to 5 (with 1 being the worst and 5 being the best) may be used, and a rating of 3 or more or 4 or more may represent a high reputation.

The calculation unit 46 has a table 45c that associates the result of a survey conducted after the security is issued with a factor, and selects the factor corresponding to the number of views by referring to this table 45c. The insurance premium calculated after the security 10 is issued using the factor corresponding to the reputation of the construction work state or the usage of the project may be used when the insurance premium is reviewed at predetermined periods, for example.

As for the factors corresponding to the survey results shown in Figs. 13 and 14, a table may be provided that selects the factor corresponding to the survey result for each of the different types of securities 10 (different projects), so that the factor for the corresponding security 10 is used. That is, the factor may be different among different types of securities 10 (different projects). Alternatively, as for the factors corresponding to the survey results, a table may be provided that associates factors with the total or average values of the reputation in the survey results of the different types of securities 10 in one group 21 (different projects), so that the same factor is selected for all securities 10 of the group 21. In other words, the same factors may be used for all types of securities 10 of one group.

Referring to Fig. 15, to calculate the insurance premium, the calculation unit 46 calculates a base insurance premium 46x based on parameters such as the probability that the project of the security 10 becomes unable to pay interest and/or defaults, the expected interest rate determined based on a certain amount of profit gained through asset management, and the expected project expense ratio of various expenses necessary for project operations such as insurance premium collection and maintenance of contracts. Alternatively, the cost of the insurance policy is calculated by multiplying the probability that the project becomes unable to pay interest and/or defaults by the average amount of damage, and the cost of the insurance policy is multiplied by the expected interest rate or the expected project expense ratio to calculate the base insurance premium 46x. As for the probability that the project will become unable to pay interest and/or default, it can be expected that a public project such as infrastructure development funded through a security 10 has a lower probability that the project will be unsuccessful than the management of a restaurant, for example. The probability that a project will be unsuccessful tends to be higher when the project is conducted in or near a conflict area. When one insurance policy 20 is set for one group of securities of different projects, a greater number of insured can be expected, allowing the insurance premium to be set lower. Then, the calculation unit 46 multiplies the base insurance premium 46x thus calculated by the factor 46y selected in Figs. 12 to 14.

Additionally, when the project is developed based on a proposal of a party that has tendered for the project through proposal competitive bidding (step S1 in Fig. 5), the probability that the project will be unsuccessful can be estimated lower. For this reason, the base insurance premium 46x is also multiplied by a factor 46z that further lowers the insurance premium. The projects of the securities 10 forming the group 21 may include a project that has undergone a proposal competitive bidding process and a project that has not. In this case, the factor 46z is set such that the insurance premium is lower when the number of projects in the group 21 that have undergone a proposal competitive bidding process is greater. A table may be prepared that associates a factor 46z with the number of securities 10 of the projects in the group 21 that have undergone a proposal competitive bidding process, and the factor 46z corresponding to the number of securities 10 may be selected.

The calculation unit 46 further multiplies the base insurance premium 46x by the factor 46y determined taking into consideration the number of web page views and/or the result of a survey to calculate the final insurance premium 46a. In some cases, the calculation unit 46 calculates the final insurance premium 46a by multiplying the base insurance premium 46x by the factor 46z. In other cases, the calculation unit 46 calculates the final insurance premium 46a by multiplying the base insurance premium 46x by the factors 46y and 46z. The final insurance premium 46a is the insurance premium borne by the insured (security holder). All or a portion of the annual interest (interest rate) 17 received by the security holder of a security 10 may be allocated to the final insurance premium 46a. Alternatively, in place of or in addition to the interest, all or a portion of the dividend 18 may be allocated to the insurance premium. Furthermore, the insurance premiums may be paid separately instead of allocating the interest or dividends.

The payment determination unit 47 receives financial state data sent from the project operator computer 60 and via the comprehensive management computer 70 or the certification organization computer 80. The financial state data may be financial statement data of a fiscal term. The payment determination unit 47 determines, based on the financial state data, whether the interest can be paid and whether the dividend is appropriate, for example. In other words, the payment determination unit 47 determines whether the issuing entity has become unable to pay interest and/or defaulted. If the issuing entity has become unable to pay interest and/or defaulted, the payment determination unit 47 starts a process of paying the insurance proceeds. That is, the payment determination unit 47 performs a process of paying money equivalent to the non-guaranteed portion of the security 10 as the insurance proceeds to the security holder.

As long as the management system 30 includes the information publication unit 41, the survey unit 42, the securities issuing unit 43, the securities management unit 44, the security holders management unit 45, the calculation unit 46, and the payment determination unit 47, each unit may be implemented in any server.

### [Description of Process from Announcement of Project Plan to Start of Project]

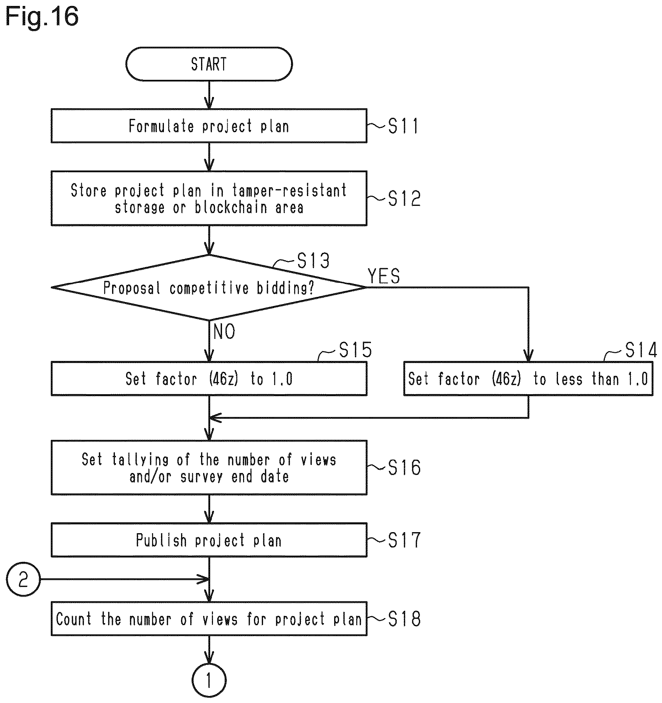

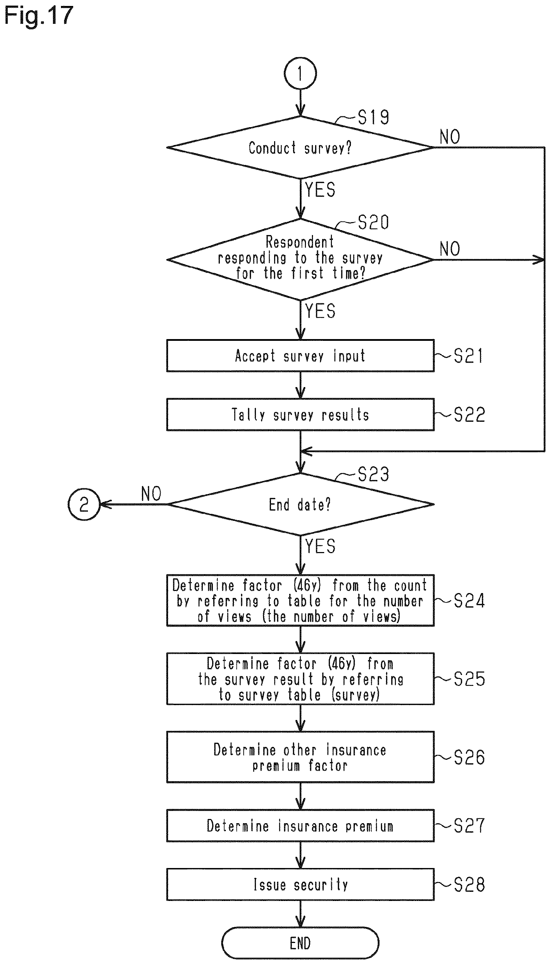

Referring to Figs. 16 and 17, the process from the announcement of a project plan to the start of the project is described using a theme park construction as an example.

At step S11, a project plan for the project to be conducted with a security 10 is prepared, and the project operator computer 60 sends data on the project plan to the comprehensive management computer 70, which then sends it to the certification organization computer 80.

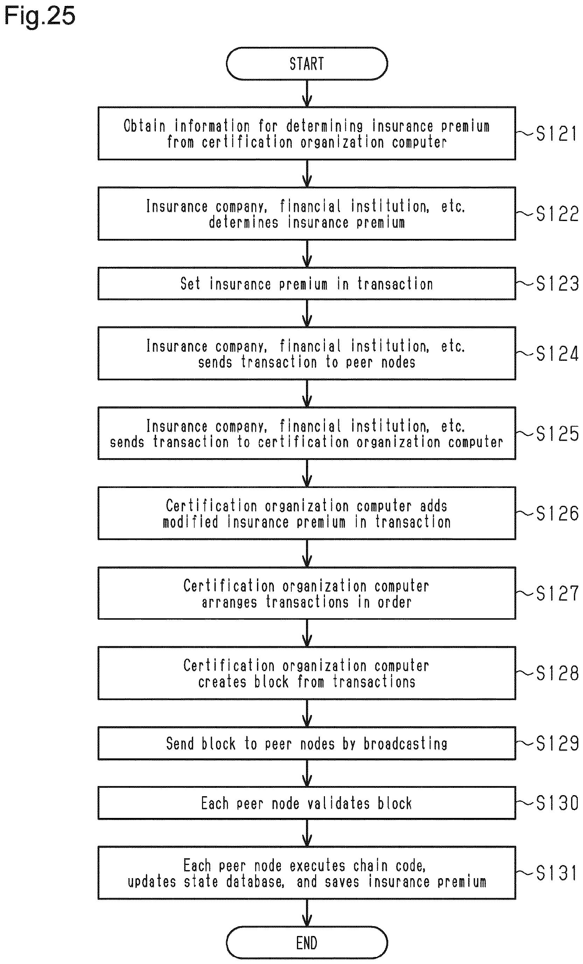

At step S12, the certification organization computer 80 performs a process of storing the data on the project plan in tamper-resistant storage and/or a blockchain area (see Fig. 25). The calculation unit 46 of the insurance computer 120 obtains the project plan data from the certification organization computer 80.

At step S13, the calculation unit 46 determines whether proposal competitive bidding has been conducted. If proposal competitive bidding has been conducted, the factor 46z is set to less than 1.0 at step S14. If proposal competitive bidding has not been conducted, the factor 46z is set to 1.0 at step S15.

At step S16, the information publication unit 41 of the information publication computer 110 sets the settings for tallying the number of views of web pages and the end date of a survey. At step S17, the information publication unit 41 publishes data on web pages. The data to be published is provided by the project operator computer 60 to the certification organization computer 80 via the comprehensive management computer 70, and obtained by the information publication computer 110 from the certification organization computer 80. The data file containing the data to be published is assigned a hash value by the project operator computer 60 (step S77 described below). When the assigned hash value agrees with the hash value calculated by the information publication unit 41, the information publication unit 41 publishes the data in the data file. The information publication unit 41 may also obtain the data directly from the project operator computer 60 or the comprehensive management computer 70. The information publication unit 41 publishes the data on the plan of the project to be funded using the security 10 through web pages of financial institutions or securities companies, for example. That is, the project plan for the construction of the theme park to be funded through the security 10 is published on web pages. This allows investors to examine, via investor computers 50, the project plan of the security 10 to be issued to determine whether to purchase the security 10. The web pages also publish that an insurance policy 20 is provided for the non-guaranteed portion of the security 10, and that its insurance premium varies according to the number of web page views and survey results. The web pages also publish that the insurance premiums can be paid with the interest or dividends, for example.

At step S18, the information publication unit 41 starts a process of counting the number of web page views during a predetermined period from the time when the project plan is announced to a given time before the issuance of the security 10.

At step S19, the survey unit 42 determines whether to conduct a survey on approval or disapproval of the project (theme park construction) to be funded by issuing the security 10. If a survey is to be conducted, the process proceeds to step S20. The target of the survey may be local residents, who may access a web page of the survey from their smartphones, personal computers, or other information processing terminals. The information publication unit 41 and the survey unit 42 allow users who have registered for an account and logged in to view the web page, increments the number of views, and enables survey input.

At step S20, the survey unit 42 determines whether a user is responding to the survey for the first time, by referring to the logs and cookies of the logged-in users. If the user is responding for the first time, the process proceeds to step S21. If not, the process proceeds to step S23. Local residents who are responding to the survey for the first time input their answers to the survey on their information processing terminals.

At step S21, the survey unit 42 receives survey results sent from the information processing terminals of local residents.

At step S22, the survey unit 42 tallies the survey result. The survey process described above can prevent the same local residents from repeatedly answering the survey, thereby improving the accuracy of the survey results.

At step S23, the survey unit 42 determines whether the end date of the survey has been reached. If the end date has been reached, the process proceeds to step S24. If the end date has not been reached, the process from step S18 is repeated. The period in which the survey is conducted is a predetermined period from the announcement of the project plan to a given time before the issuance of the security 10. For example, this period may be the same as or different from the period in which the number of web page views is counted.

Data such as the number of web page views and survey tally data is sent to the comprehensive management computer 70, which then sends it to the certification organization computer 80. The calculation unit 46 of the insurance computer 120 obtains the data such as the number of web page views and survey tally data from the certification organization computer 80.

At step S24, the calculation unit 46 determines the factor 46y based on the number of views by referring to the table 45a (Fig. 12) that selects the factor corresponding to the number of web page views. At step S25, the factor 46y is determined based on the survey result by referring to the table 45b (Fig. 13) that associates the number of responses indicating approval with a factor.

At step S26, the calculation unit 46 determines another factor, if any. The tables 45a and 45b may also be obtained from the certification organization computer 80. The factor 46z that is used when proposal competitive bidding is conducted may also be obtained from the certification organization computer 80 (see steps S14 and S15).

At step S27, the calculation unit 46 calculates the base insurance premium 46x for the security 10. The data for calculating the base insurance premium 46x is obtained from the certification organization computer 80. The calculation unit 46 multiplies the base insurance premium by the factors 46y and 46z to calculate the final insurance premium 46a. The final insurance premium 46a is provided to the certification organization computer 80 via the comprehensive management computer 70, and the information publication unit 41 obtains the data on the insurance premium from the certification organization computer 80 via the comprehensive management computer 70 and publishes it on web pages. This allows investors to decide whether to purchase the publicly offered security 10 by referring not only to the contents of the project but also to the insurance premium.

Then, at step S28, upon receiving purchase order data for a security 10, the securities issuing unit 43 issues the security 10 to the investor who has sent the purchase order data. At this time, the securities issuing unit 43 receives data on whether to obtain the insurance policy 20 and a payment method for the insurance premium if the insurance policy 20 is obtained. Examples of payment methods for the insurance premium includes a method that pays the insurance premium with the interest, with the dividend, or with the interest and dividend, a method that pays the insurance premium with the interest, dividend, and additional payment, and a method that pays the insurance premium separately from the interest and dividend. The securities issuing unit 43 then updates the database (Fig. 9) of the security holders management unit 45, which manages the security holders. Consequently, when the method of paying the insurance premium with the interest or dividend is selected, the interest or dividend is allocated to the insurance premium, and the remainder is paid to the security holder.

The calculation unit 46 reviews the insurance premium at predetermined periods, for example, every year when the interest and dividend are paid. For example, in the case of the construction of a theme park, the completion or opening of the park requires several years after the start of the construction work or after the security 10 is issued. As such, the calculation unit 46 reviews the insurance premium when the interest and dividend are paid. That is, the information publication unit 41 reports the progress of the construction work and other states on web pages and counts the number of views for a predetermined period, such as one year, after the issuance. Additionally, during the construction of the theme park, the survey unit 42 examines matters that affect the credibility of the theme park after its opening, such as whether the noise level of the construction work is below the standard level, and whether the construction work is causing any pollution. The survey unit 42 then conducts a survey on the reputation of the theme park construction. Then, the calculation unit 46 calculates the base insurance premium 46x again, reselects the factor 46y corresponding to the number of views and the factor 46y corresponding the number of responses indicating approval in the survey, and multiplies the base insurance premium 46x by the factors 46y to calculate the final insurance premium 46a. If necessary, the factor 46z is also used to calculate the final insurance premium 46a. The revised final insurance premium 46a is then collected from the interest and dividends, and the remainder is paid to the security holder. That is, the process of Figs. 16 and 17 is repeated at predetermined periods, such as every year.

### [Description of Process after Project Start]

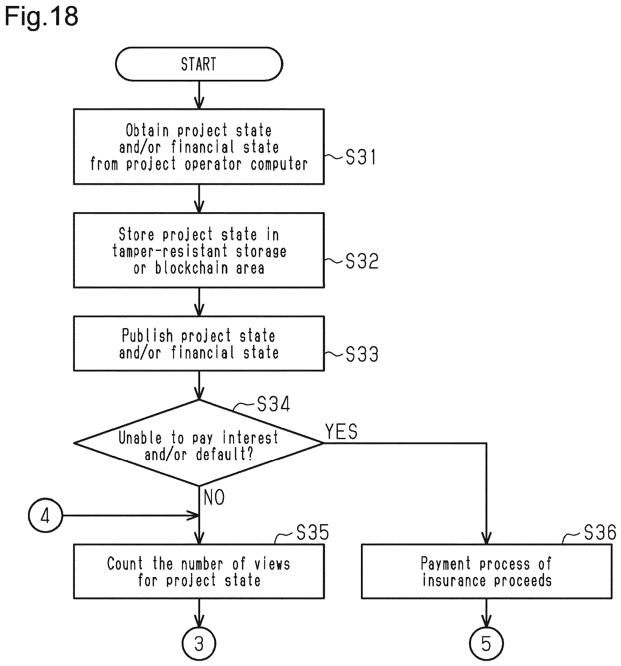

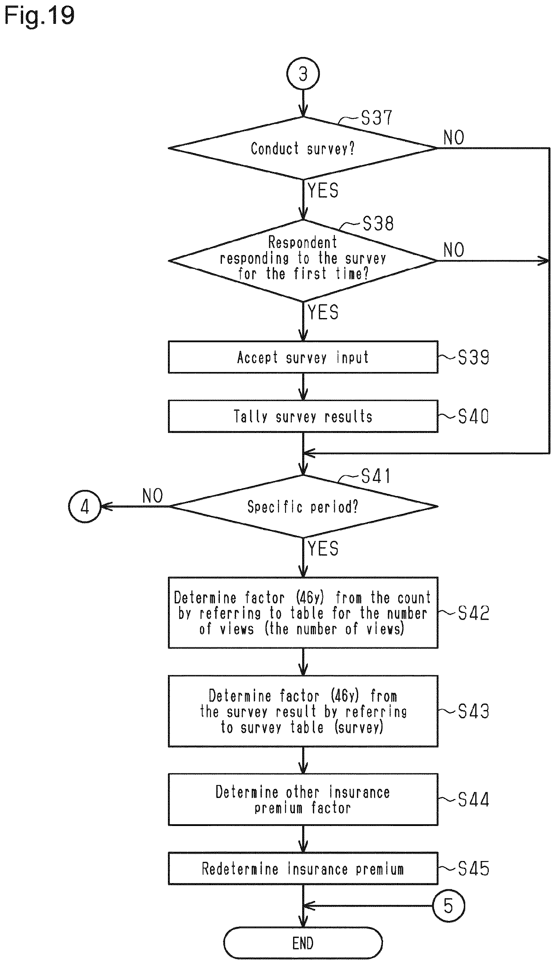

Referring to Figs. 18 and 19, a process is now described that is performed after a project is started, using an example of the process performed after a theme park is opened.

The project operator computer 60 periodically sends data on the project state and financial state to the comprehensive management computer 70. At step S31, the certification organization computer 80 obtains the data on the project state and financial state from the comprehensive management computer 70.

At step S32, the certification organization computer 80 stores the data on the project state and financial state in tamper-resistant storage and/or a blockchain area (see Fig. 25).

At step S33, the information publication unit 41 of the information publication computer 110 obtains data to be published from the certification organization computer 80 and publishes it on a web page. The data to be published is data provided by the project operator computer 60 to the certification organization computer 80 via the comprehensive management computer 70, and obtained by the information publication computer 110 from the certification organization computer 80. The data file containing the data to be published may be assigned a hash value by the project operator computer 60 (step S77 described below). When the assigned hash value agrees with the hash value calculated by the information publication unit 41, the information publication unit 41 publishes the data in the data file. The information publication unit 41 may also obtain the data directly from the project operator computer 60 or the comprehensive management computer 70. This allows investors to use, via investor computers 50, the data to assess the future of the project invested with the security 10, that is, to determine whether to keep the security 10.

At step S34, the payment determination unit 47 of the insurance computer 120 receives the data on the project state and financial state from the certification organization computer 80, and determines whether the issuing entity has become unable to pay interest and/or defaulted. If the issuing entity has not become unable to pay interest and/or defaulted, the process proceeds to step S35. If the issuing entity has become unable to pay interest and/or defaulted, the process proceeds to step S36.

At step S36, the payment determination unit 47 starts a process of paying insurance proceeds for the non-guaranteed portion and performs a process of paying the non-guaranteed portion of the security 10 to the security holders. At this time, the security holders also receive the guaranteed money, guaranteed with the guaranteed rate (guaranteed limit) 15, from the guarantor 16.

At step S35, the information publication unit 41 starts a process of counting the number of web page views during a predetermined period after the opening of the theme park. At step S37, the survey unit 42 determines whether to conduct a survey on approval or disapproval of the project (theme park construction) for which funds are acquired by issuing the security 10. If the survey is to be conducted, the process proceeds to step S38.

At step S38, the survey unit 42 determines whether a respondent is responding to the survey for the first time and permits the respondent if it is his or her first time to respond. Local residents who are responding to the survey for the first time input their answers to the survey on their information processing terminals. At step S39, the survey unit 42 receives the survey results transmitted from the information processing terminals of local residents. At step S40, the survey unit 42 tallies the survey results. The survey process described above can prevent the same local residents from repeatedly answering the survey, thereby improving the accuracy of the survey results.

At step S41, the survey unit 42 determines whether the specific period of the survey has ended. If the period has ended, the process proceeds to step S42. If it has not ended, the process from step S35 is repeated. The period in which the survey is conducted is a predetermined period from the announcement of the project plan to a given time before the issuance of the security 10. For example, this period may be the same as or different from the period in which the number of web page views is counted (step S12).

Data such as the number of web page views and survey tally data is sent to the comprehensive management computer 70, which then sends it to the certification organization computer 80. The calculation unit 46 of the insurance computer 120 obtains the data such as the number of web page views and survey tally data from the certification organization computer 80.

At step S42, the calculation unit 46 determines the factor 46y based on the number of views by referring to the table 45a (Fig. 12) that selects the factor corresponding to the number of web page views. At step S43, the factor 46y is determined based on the survey result by referring to the table 45c (Fig. 14). At step S44, the calculation unit 46 determines another factor, if any. The tables 45a and 45c may also be obtained from the certification organization computer 80. The factor 46z that is used when proposal competitive bidding is conducted may also be obtained from the certification organization computer 80 (see steps S14 and S15).

At step S45, the calculation unit 46 recalculates the base insurance premium 46x for the security 10. The data for recalculating the base insurance premium 46x is obtained from the certification organization computer 80. The calculation unit 46 multiplies the base insurance premium by the factors 46y and 46z to recalculate the final insurance premium 46a. The final insurance premium 46a is sent to the certification organization computer 80 via the comprehensive management computer 70, and the information publication unit 41 obtains the data on the insurance premium from the certification organization computer 80 via the comprehensive management computer 70 and publishes it on web pages. This allows investors to decide whether to purchase the security 10 by referring not only to the contents of the project but also to the insurance premium.

The calculation of insurance premium as described above is also repeated by repeating the process shown in Figs. 18 and 19 to review the insurance premium at predetermined periods, such as every year, even after the theme park opens.

### [Description of Insurance Premium Payment Method]

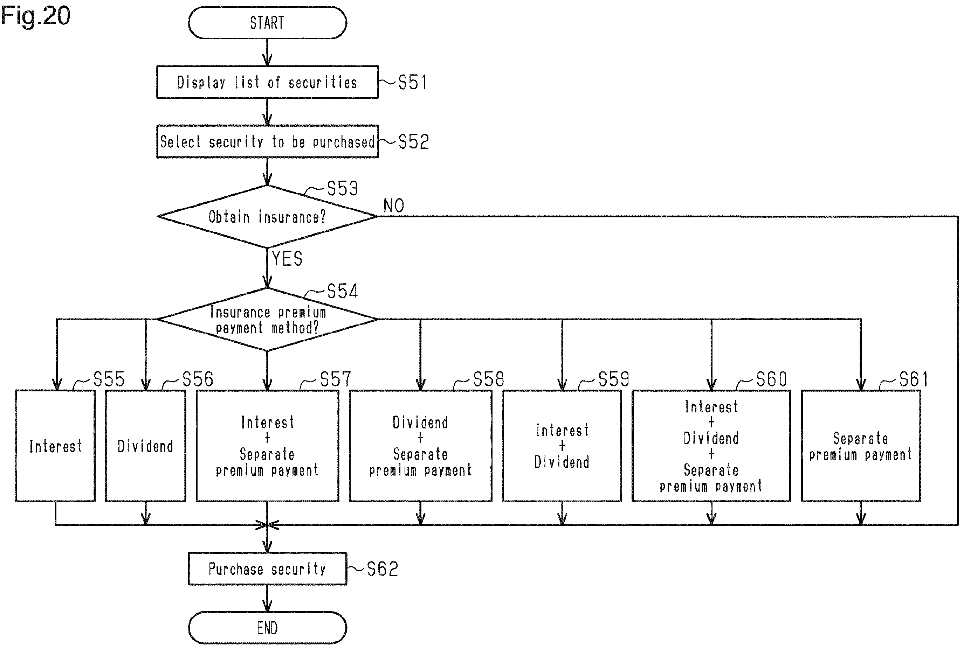

Referring to Fig. 20, the process of selecting an insurance premium payment method when purchasing a security 10 is now described. At step S51, the securities issuing unit 43 of the security issuence management computer 100 displays a list of securities 10 for sale through the investor computer 50. The details of each security 10 can be obtained on a web page published by the information publication unit 41. The web page may publish details of each project and the expected interest rate and insurance premium. The published information is based on data obtained from the certification organization computer 80.

At step S52, the securities issuing unit 43 receives selection data on one or more securities 10 selected from the securities 10 listed on the investor computer 50. The securities issuing unit 43 displays, on the display of the investor computer, a screen asking whether to obtain an insurance policy and receives obtainment data or non- obtainment data regarding the insurance policy 20 sent from the investor computer 50. At step S54, the securities issuing unit 43 displays, on the display of the investor computer 50, a selection screen for selecting an insurance premium payment method.

At step S55, the securities issuing unit 43 selects a payment method that pays the insurance premium with all or a portion of the interest of the annual interest (interest rate) 17.

At step S56, the securities issuing unit 43 selects a payment method that pays the insurance premiums with all or a portion of the dividend 18.

At step S57, the securities issuing unit 43 selects a payment method that pays the insurance premium with all or a portion of the interest of the annual interest (interest rate) 17 and a separate payment.

At step S58, the securities issuing unit 43 selects a payment method that pays the insurance premium with all or a portion of the dividend 18 and a separate payment.

At step S59, the securities issuing unit 43 selects a payment method that pays the insurance premium with all or a portion of the interest and all or a portion of the dividend 18.

At step S60, the securities issuing unit 43 selects a payment method that pays the insurance premium with all or a portion of the interest, all or a portion of the dividend 18, and a separate payment. With step S55 to step S60, at least one of the interest and dividend will become zero or be reduced due to the payment of insurance premium.

At step S61, the securities issuing unit 43 selects a payment method that pays the insurance premium only with a separate payment. In this case, the entire interest and dividend can be received.

The method that pays the insurance premium with the interest (step S55), the method that pays the insurance premium with the dividend only (step S56), and the method that pays the insurance premium with the interest and dividend (step S59) require an additional payment if the interest and dividend are not enough to cover the insurance premium.

At step S62, the securities issuing unit 43 performs a process of purchasing the security 10 with the insurance premium payment method specified for the security 10 selected by the investor, and updates the database managing the security holders shown in Fig. 9.

### [Description of Process of Uploading Data from Project Operator Computer or the like to Comprehensive Management Computer or the like]

As described above, in the data processing system, data on projects is sent to the comprehensive management computer 70. Specifically, the project operator computer 60 sends to the comprehensive management computer 70 data on the project plan, data on the bidding, data on states such as the construction work progress, data on the financial state, data on the project state and financial state, and other data. The security issuence management computer 100 also sends data such as the holders of the securities 10 and the transaction history to the comprehensive management computer 70. The information publication computer 110 sends data such as the number of web page views and survey results to the comprehensive management computer 70. The insurance computer 120 sends data such as the calculated insurance premium to the comprehensive management computer 70. The comprehensive management computer 70 sends these sets of data to the certification organization computer 80, which securely manages the received data as reference data. In this situation, the computers 100, 110, and 120 serve as the sending computers, and the comprehensive management computer 70 serves as the receiving computer.

On the other hand, to publish information, the information publication computer 110 obtains, from the comprehensive management computer 70, data on the project plan, data on states such as the construction work progress, data on the financial state, data on the project state and financial state, and other data sent from the certification organization computer 80. To calculate the insurance premium, the insurance computer 120 obtains, from the comprehensive management computer 70, the data on the bidding, data on the project plan, data on states such as the construction work progress, data on the financial state, data on the project state and financial state, the tables 45a and 45c, and other data, which are sent from the certification organization computer 80. In this case, the computers 100, 110, and 120 serve as the receiving computers, and the comprehensive management computer 70 serves as the sending computer.

As shown in Fig. 6, the computers 60, 70, 80, 100, 110, and 120 are installed with authentication programs 60a, 70a, 80a, 100a, 110a, and 120a, which calculate hash values using a hash function and securely store private keys. The certification organization computer 80 also manages public keys (see Fig. 6).

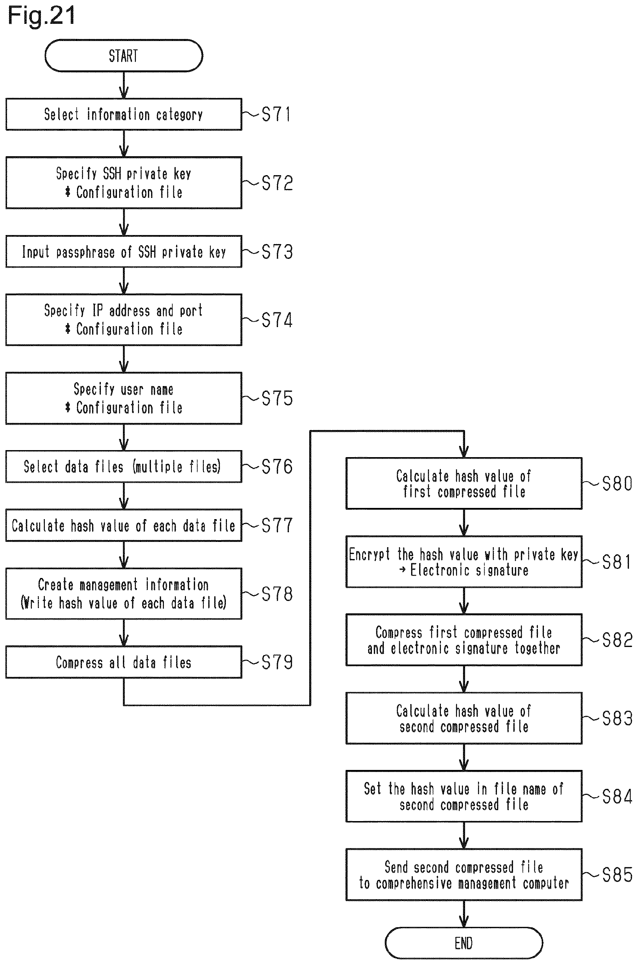

The process of sending data from a sending computer to a receiving computer is performed as shown in Fig. 21. Fig. 21 shows an example of a process in which the project operator computer 60 (sending computer) sends data on the bidding, data on the project plan, data on states such as the construction work progress, data on the financial state, data on the project state and financial state, and other data to the comprehensive management computer 70 (receiving computer).

At step S71, the authentication program 60a of the project operator computer 60 selects the category of data to be sent to the comprehensive management computer 70. Specifically, a category is selected from categories such as a category of project plan before the issuance of the security 10, a category of construction work progress after the issuance of the security, and a category of financial state.

At step S72, the authentication program 60a specifies an SSH private key. At step S73, the authentication program 60a prompts the user to enter a passphrase to access the authentication program 60a. A password may be used instead of a passphrase, or both a passphrase and a password may be used.

At step S74, the authentication program 60a specifies the IP address and port of the comprehensive management computer 70, which is the receiving computer. At step S75, the authentication program 60a specifies the user name of the authentication program 60a, which is the sending computer. The data to be set at steps S72 to S75 may be written in a configuration file in advance, and the input may be omitted.

At step S76, the authentication program 60a selects one or more data files containing data to be sent to the comprehensive management computer 70. At step S77, the authentication program 60a calculates a hash value for each selected file.

At step S78, management information of each data file including the hash value is created. This hash value is used to detect data alteration when the information publication unit 41 publishes the data on a web page.

At step S79, the authentication program 60a compresses all the data files and creates one first compressed file. The first compressed file is in ZIP format in this example, but the format is not limited to this.

At step S80, the authentication program 60a calculates a hash value for the first compressed file. At step S81, the authentication program 60a encrypts the hash value with the private key determined in advance and creates an electronic signature.

At step S82, the authentication program 60a compresses the electronic signature and the first compressed file into one file to create a second compressed file. The second compressed file may also be created in ZIP format, for example. At step S83, the authentication program 60a calculates a second hash value for the second compressed file.

At step S84, the authentication program 60a sets the hash value in the file name of the second compressed file. The hash value may also be written in a separate file. At step S85, the authentication program 60a sends the second compressed file and the hash value of the second compressed file to the comprehensive management computer 70.

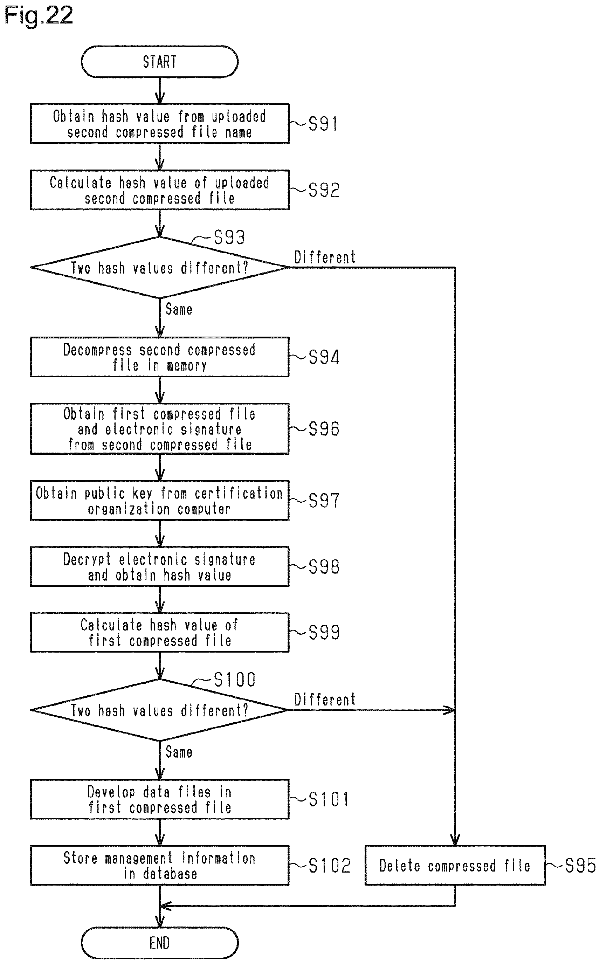

Referring to Fig. 22, a process is now described that is performed by the comprehensive management computer 70 upon receiving the second compressed file and the hash value of the second compressed file sent from the project operator computer 60.

At step S91, the authentication program 70a of the comprehensive management computer 70 receives the second compressed file and the hash value of the second compressed file and obtains the hash value of the second compressed file.

At step S92, the authentication program 70a calculates a hash value for the second compressed file. At step S93, the authentication program 70a compares the hash value of the second compressed file obtained at step S91 with the hash value of the second compressed file calculated at step S92. If the values agree with each other, the process proceeds to step S94. If not, the process proceeds to step S95.

At step S94, the authentication program 70a decompresses the second compressed file in memory. At step S95, the authentication program 70a deletes the second compressed file assuming that the data has been altered.

At step S96, the authentication program 70a obtains the electronic signature and the first compressed file from the second compressed file. At step S97, the authentication program 70a obtains the public key from the certification organization computer 80. If the public key has been obtained, the authentication program 70a verifies its authenticity.

At step S98, the authentication program 70a decrypts the electronic signature with the public key and obtains the hash value of the first compressed file. At step S99, the authentication program 70a calculates a hash value for the first compressed file. At step S100, the authentication program 70a compares the hash value of the first compressed file obtained at step S98 with the hash value of the first compressed file calculated at step S99. If the values agree with each other, the process ends or proceeds to step S101. If the values do not agree with each other, the process proceeds to step S95.

At step S101, the authentication program 70a decompresses the first compressed file in memory and develops the data file. At step S101, the authentication program 70a stores the management information in the database.

The security issuence management computer 100 sends data such as the holders of the security 10 and the transaction history to the comprehensive management computer 70. The information publication computer 110 sends data such as the number of web page views and survey results to the comprehensive management computer 70. The insurance computer 120 sends data such as calculated insurance premiums to the comprehensive management computer 70. The process of uploading data to the comprehensive management computer 70 from these computers 100, 110, and 120 is the same as the process in Figs. 21 and 22, and therefore the details are omitted.

### [Description of Process of Uploading from Comprehensive Management Computer to Certification Organization Computer]

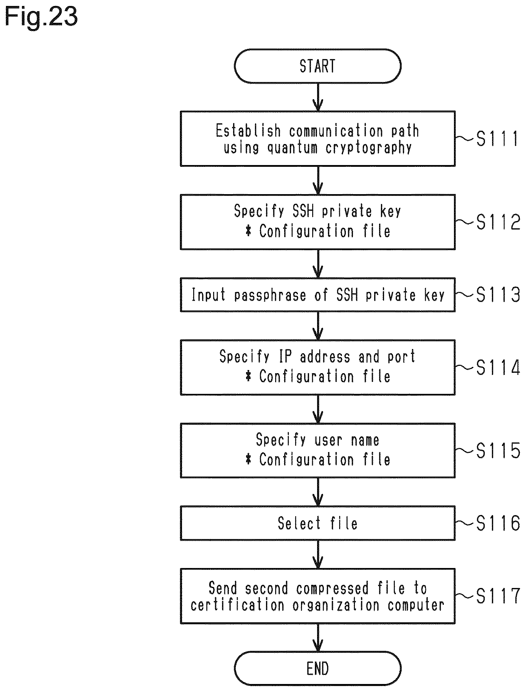

When providing reference data to the certification organization computer 80, the authentication program 60a sends the second compressed file as it is to the certification organization computer 80. Referring to Fig. 23, a process of uploading the second compressed file to the certification organization computer 80 from the comprehensive management computer 70 is described.

At step S111, the authentication program 70a of the comprehensive management computer 70 and the authentication program 80a of the certification organization computer 80 establish a secure communication line using quantum cryptography such as quantum key distribution. Steps S112 to S115 are the same as steps S72 to S75 described above. At step S116, the authentication program 70a selects the second compressed file and the hash value of the second compressed file, and sends them to the certification organization computer 80 at step S117. The certification organization computer 80 performs the process from step S91 to step S102.

### [Description of Process of Progress Management Database]

As shown in Fig. 24, large-scale construction works, such as an infrastructure construction works, involve steps of start-up payment, preparation work, framing work, interim payment, interior/exterior work, exterior structure work, and delivery payment, which are performed in this order. The project operator computer 60 manages data on the project plan, data on states such as the construction work progress, data on the financial state, data on the project state and financial state (including the project state and the interest and dividend of the security 10), and other data in the progress management database 61. The project operator computer 60 then performs the process shown in Fig. 21 to send data in the progress management database to the comprehensive management computer 70 periodically or at each step. The comprehensive management computer 70 sends the data to the certification organization computer 80.

### [Description of Process of Storing Data in Blockchain]

The data provided by the project operator computer 60, such as data on the project plan, data on states such as the construction work progress, data on the financial state, and data on the project state and financial state is used by investors to determine whether to buy the security 10 for investment or whether to continue the investment. These sets of data are also used to calculate the insurance premiums of the insurance policy 20. As such, these sets of data should be securely managed in a manner that resists tampering. The same applies to the data such as the history of past insurance premiums and the history of the holders of the securities 10. To this end, the data processing system uses a blockchain to manage these sets of data. Referring to Fig. 25, a process of storing an insurance premium in a blockchain is now described. The blockchain used here is a consortium blockchain, and the computers of the authorized members, or financial institutions and insurance companies in this example, serve as peer nodes to form a P2P network. The blockchain may also be a public blockchain.

At step S121, the calculation unit 46 of the insurance computer 120 obtains data such as the number of web page views and the survey tally data from the certification organization computer 80. At step S122, the calculation unit 46 calculates the base insurance premium 46x and then calculates the final insurance premium 46a using the factor 46z, which is used when proposal competitive bidding is conducted, and the factors 46y, which correspond to the number of views and the survey result.

At step S123, the insurance computer 120 sets the final insurance premium 46a in a transaction and sends the transaction to the peer nodes at step S124. Each peer node executes the chain code to verify the transaction and signs and returns the result. At step S125, the insurance computer 120 sends the transaction to the certification organization computer 80 along with the verification results at the peer nodes.

At step S126, the certification organization computer 80 verifies whether the insurance premium is appropriate and adds a modified insurance premium to the transaction if necessary. At step S127, the certification organization computer 80 arranges the transactions in order and creates a block from the transactions at step S128.

At step S129, the certification organization computer 80 sends the block to the peer nodes by broadcasting. At step S130, each peer node validates the block. At step S131, each peer node executes the chain code, updates the state database of the peer node, and saves the insurance premium.

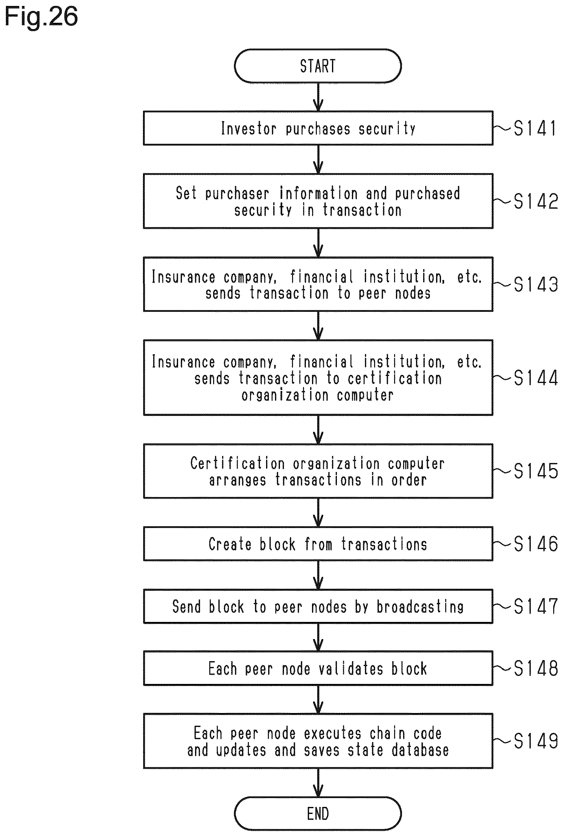

As shown in Fig. 26, the blockchain stores the trading history of the security 10. At step S141, the securities issuing unit 43 performs a process of purchasing a security 10 with the insurance premium payment method specified for the security 10 selected by the investor, and updates the database managing the security holders shown in Fig. 9. At step S142, the security issuence management computer 100 sets the purchaser ID of the security 10 and the security ID that identifies the security 10 in the transaction.

At step S143, the security issuence management computer 100 sends the transaction to the peer nodes. The peer nodes validate the transaction. At step S144, the security issuence management computer 100 sends the transaction to the certification organization computer 80 along with the validation results at the peer nodes.

At step S145, the certification organization computer 80 arranges the transactions in order. At step S146, the certification organization computer 80 creates a block from the transactions. At step S147, the certification organization computer 80 sends the block to the peer nodes by broadcasting.

At step S148, each peer node validates the block. At step S149, each peer node executes the chain code, updates the state database of the peer node, and saves the purchaser ID, security ID, and the like.

The data processing system described above has the following advantageous effects.

(1-1) The insurance policy 20 is provided for the non-guaranteed portion of the security 10.

(1-2) The insurance premium can be paid with the interest and/or dividend of the security 10. This eliminates the need for the holder of the security 10 who has the insurance policy 20 to pay the insurance premium separately. Furthermore, the expected project expense ratio, which is one of the factors that determine the insurance premium, can also be reduced, thereby lowering the overall insurance premium.

(1-3) The insurance policy 20 is provided for the group 21 of securities 10 issued for different projects. As such, a large number of investors obtain the insurance policy, allowing the insurance premium to be lower.

(1-4) The information publication unit 41 publishes the project plan of the project for which funds are acquired by issuing the security 10 on web pages in advance, and manages the number of web page views. A security 10 with a higher number of views has a higher level of attention and popularity, indicating that the project funded through the security 10 has a higher level of attention and popularity and a lower risk of becoming unsuccessful. The calculation unit 46 can easily calculate and lower the insurance premium by performing a process of lowering the insurance premium when the number of views is greater.

(1-5) The information publication unit 41 publishes on a web page the state of the project and manages the number of web page views at predetermined periods after the security 10 is issued. A security 10 that has a large number of views, even after the security 10 is issued, has a high level of attention and popularity. It can thus be assumed that the project has a lower risk of becoming unsuccessful. When reviewing the insurance premium after the security is issued, for example, the calculation unit 46 can easily calculate and lower the insurance premium by performing a process of lowering the insurance premium when the number of views is greater.

(1-6) The survey unit 42 performs a process of conducting a preliminary survey on approval or disapproval of the project for which funds are acquired by issuing the security. The opinions of local residents on the project can thus be obtained. When the result of the survey indicates a large number of positive opinions about the project, it can be assumed that the risk of the project becoming unsuccessful is low. The calculation unit 46 can easily calculate and lower the insurance premium by performing a process of lowering the insurance premium when the number of positive responses to the project is greater.

(1-7) The survey unit 42 performs a process of conducting a survey on the reputation of the project at predetermined periods after the security 10 is issued. The opinions of local residents on the project can thus be obtained. When the result of the survey indicates a high reputation, the level of attention and popularity is accordingly high. It can thus be assumed that the risk of the project becoming unsuccessful is low. When reviewing the insurance premium after the security is issued, for example, the calculation unit 46 can easily calculate and lower the insurance premium by performing a process of lowering the insurance premium when the reputation is higher.

(1-8) When the project plan is developed based on a proposal of a party that has tendered for the project through proposal competitive bidding, the insurance premium can be easily calculated and lowered by performing a process of further lowering the insurance premium.

(1-9) The data on securities 10 and projects published by the information publication unit 41 is data that is proven, using the hash function, not to have been altered, so the reliability of the published data is increased.

(1-10) The data that serves as the basis for calculating the insurance premium, such as the number of views, survey results, and bidding methods, is electronically signed and sent to the certification organization computer 80 via the comprehensive management computer 70, thereby preventing data alteration.

(1-11) The insurance premium and the information used to calculate the insurance premium are stored in a blockchain and therefore managed in a secure manner. A long-term project is managed based on the data of each year. Any alteration in past data creates errors in the subsequent data. The use of a blockchain enables secure data management, preventing such unexpected occurrences.

### [Second Embodiment]

### [Description of Insurance Policy for Guarantor]

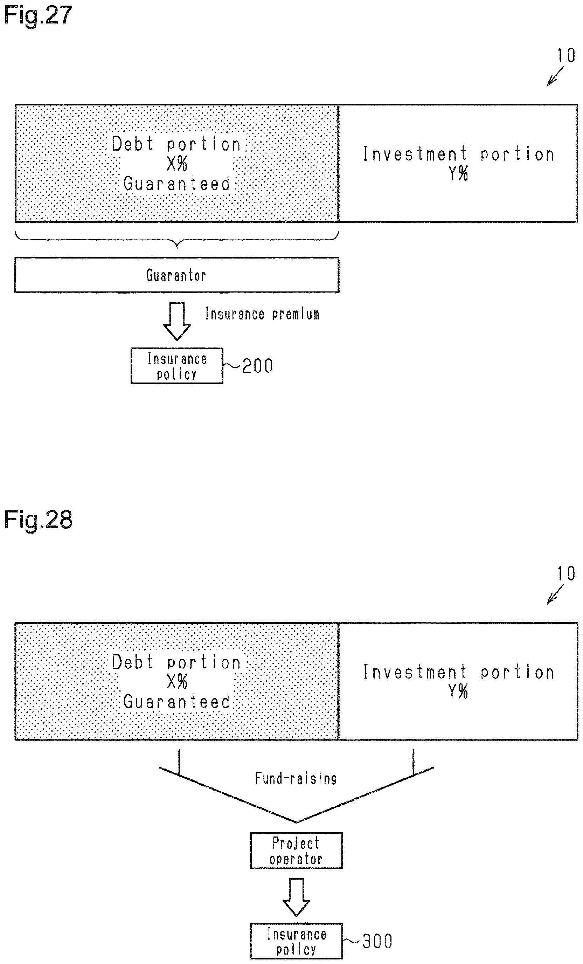

As shown in Fig. 27, a security 10 has a debt portion, which is a guaranteed portion guaranteed by a third party guarantor, such as a national or local government. In some cases, the guarantor may serve as a guarantor of multiple securities 10, instead of one security 10 for one project. Setting an insurance system for the guarantor encourages a third party to become a guarantor. For this reason, an insurance policy 200 for the guarantor is provided. With this insurance policy 200, the guarantor pays the insurance premium. The insurance premium of this insurance policy 200 is calculated also by the calculation unit 46 of the insurance computer 120. The insurance premium is calculated in the same manner as the insurance premium of the insurance policy 20 for the non-guaranteed portion in the first embodiment.

That is, in calculating the insurance premium, the calculation unit 46 calculates the base insurance premium 46x as shown in Fig. 15. The calculation unit 46 determines the factor 46y based on the number of views by referring to the table 45a (Fig. 12) that selects the factor corresponding to the number of web page views. Also, the factor 46y is determined based on the survey result by referring to the tables 45b and 45c (Figs. 13 and 14), which associate the number of responses indicating approval with a factor. When the project is developed based on the proposal of a party that has tendered for the project through proposal competitive bidding as described above, the calculation unit 46 calculates the final insurance premium 46a by further multiplying by the factor 46z (less than 1.0). The calculation unit 46 calculates the final insurance premium 46a by multiplying the base insurance premium by the factors 46y and 46z.

The payment determination unit 47 of the insurance computer 120 receives data on the project state and financial state from the certification organization computer 80, and determines whether the issuing entity has become unable to pay interest and/or defaulted. If the issuing entity has become unable to pay interest and/or defaulted, the payment determination unit 47 starts a process of paying the insurance proceeds for the guaranteed portion and performs a process of paying the guaranteed portion of the security 10 to the guarantor. The guarantor uses the paid insurance proceeds to pay the guaranteed money to the investors who are the holders of the security 10.

The data processing system described above has the following advantageous effects.

(2-1) The insurance policy 200 is provided for the guarantor that guarantees the guaranteed portion of the security 10.

(2-2) The calculation unit 46 can easily calculate and lower the insurance premium by performing a process of lowering the insurance premium when the number of views is greater. When reviewing the insurance premium after the security is issued, for example, the calculation unit 46 can easily calculate and lower the insurance premium by performing a process of lowering the insurance premium when the number of views is greater.

(2-3) The calculation unit 46 can easily calculate and lower the insurance premium by performing a process of lowering the insurance premium when the number of positive responses to the project is greater. When reviewing the insurance premium after the security is issued, for example, the calculation unit 46 can easily calculate and lower the insurance premium by performing a process of lowering the insurance premium when the reputation is higher.

(2-4) To calculate the insurance premium of the insurance policy 200, the calculation unit 46 can also use the factors 46y and 46z that are used to calculate the insurance premium of the insurance policy 20 for the non-guaranteed portion of the security 10. This facilitates the calculation of the insurance premium.

(2-5) The insurance premium can be easily calculated and lowered by performing a process of further lowering the insurance premium when the project plan is developed based on a proposal of a party that has tendered for the project through proposal competitive bidding.

### [Third Embodiment]

### [Description of Insurance Policy for Project Operator]

As shown in Fig. 28, X% of the face value 13 of the security 10 is the guaranteed portion guaranteed by the guarantor for the investor, and the security 10 also pays dividends. This encourages investors to purchase securities 10 and also encourages project operators to use securities 10 to raise funds. If a profit is guaranteed, the project operator is further motivated to raise project funds through the security 10. For this reason, an insurance policy 300 is provided that guarantees a profit to the project operator. With this insurance policy 300, the project operator pays the insurance premium. The insurance premium of this insurance policy 300 is calculated also by the calculation unit 46 of the insurance computer 120. The insurance premium is calculated in the same manner as the insurance premium of the insurance policy 20 for the non-guaranteed portion in the first embodiment.

That is, in calculating the insurance premium, the calculation unit 46 calculates the base insurance premium 46x as shown in Fig. 15. The calculation unit 46 determines the factor 46y based on the number of views by referring to the table 45a (Fig. 12) that selects the factor corresponding to the number of web page views. Also, the factor 46y is determined based on the survey result by referring to the tables 45b and 45c (Figs. 13 and 14), which associate the number of responses indicating approval with a factor. When the project is developed based on a proposal of a party that has tendered for the project through proposal competitive bidding as described above, the calculation unit 46 calculates the final insurance premium 46a by further multiplying by the factor 46z (less than 1.0). The calculation unit 46 calculates the final insurance premium 46a by multiplying the base insurance premium by the factors 46y and 46z. The final insurance premium 46a is calculated taking into consideration the risk that the issuing entity becomes unable to pay interest and/or defaults or the risk that the expected profit is not obtained.

The payment determination unit 47 of the insurance computer 120 receives data on the project state and financial state from the certification organization computer 80 and determines whether the issuing entity has become unable to pay interest and/or defaulted. If the issuing entity has become unable to pay interest and/or defaults, the payment determination unit 47 starts a process of paying the insurance proceeds, and performs a process of paying the insurance proceeds, which guarantees the profit to the project operator. The insurance proceeds may be all or a portion of the profit.

The payment determination unit 47 receives data on the project state and financial state from the certification organization computer 80 and determines whether the expected profit can be obtained. If the expected profit cannot be obtained, the payment determination unit 47 performs a process of paying the insurance proceeds, which guarantees all of a portion of the difference between the expected profit and the actual profit. The expected profit may be the profit determined in the previous year, at the start of the project, at the time of the insurance policy contract, or at a review based on medium-term or long-term estimation.

The data processing system described above has the following advantageous effects.

(3-1) The insurance policy 300 is provided that guarantees a profit to the project operator that operates the project funded through the security 10.

(3-2) The calculation unit 46 can easily calculate and lower the insurance premium by performing a process of lowering the insurance premium when the number of views is greater. When reviewing the insurance premium after the security is issued, for example, the calculation unit 46 can easily calculate and lower the insurance premium by performing a process of lowering the insurance premium when the number of views is greater. This is because such a situation is likely to result in a greater profit.

(3-3) The calculation unit 46 can easily calculate and lower the insurance premium by performing a process of lowering the insurance premium when the number of positive responses to the project is greater. When reviewing the insurance premium after the security is issued, for example, the calculation unit 46 can easily calculate and lower the insurance premium by performing a process of lowering the insurance premium when the reputation is higher. This is because such a situation is likely to result in a greater profit.

(3-4) The calculation unit 46 can also use the factors 46y and 46z for insurance premium calculation to calculate the insurance premium of the insurance policy 300. This facilitates the calculation of the insurance premium.

(3-5) The insurance premium can be easily calculated and lowered by performing a process of further lowering the insurance premium when the project plan is developed based on the proposal of a party that has tendered for the project through proposal competitive bidding. This is because such a situation is likely to result in a greater profit.

The data processing system may be modified as follows.

The data processing system may be configured so as not to perform the process in which the survey unit 42 conducts a survey after a security is issued and the calculation unit 46 sets the insurance premium lower according to the result of the survey. Furthermore, the data processing system may be configured so as not to perform the process in which a survey is conducted before a security is issued and the calculation unit 46 sets the insurance premium lower according to the result of the survey.

The data processing system may be configured so as not to perform the process in which the information publication unit 41 manages the number of web page views at predetermined periods after a security is issued and the calculation unit 46 sets the insurance premium lower when the number of views is greater. Furthermore, the data processing system may be configured so as not to perform the process in which the number of web page views is managed before a security is issued and the calculation unit 46 sets the insurance premium lower when the number of views is greater.

The final insurance premium 46a may be calculated by multiplying the base insurance premium by either the factor 46y that is determined based on the number of web page views and/or the survey result, or the factor 46z that lowers the insurance premium for a project for which proposal competitive bidding has been conducted. It is also not necessary to use both factors 46y and 46z. The tables 45a, 45b, and 45c storing the factors 46y and 46z may be held by the calculation unit 46 of the insurance computer 120, or managed by the certification organization computer 120 and provided to the calculation unit 46 as needed.

The number of web page views is used as an index of the level of attention to the project for purposes including the calculation of insurance premiums. However, in place of or in addition to the number of views, the total viewing time of the web pages may be used as an index of the level of attention to the project. The total viewing time is the sum of the durations in which the web pages are viewed on accessing terminals (calculated based on the viewing start date and time and the viewing end date and time).

In the data processing system of Fig. 6, the certification organization computer 80 may be omitted. In this case, the comprehensive management computer 70 exchanges data with the computers 60, 100, 110, 120 using the SSH public key system or the like.

The comprehensive management computer 70 and the certification organization computer 80 may be omitted. In this case, the project operator computer 60 sendsdata on the project plan, data on the bidding, data on states such as the construction work progress, data on the financial state, data on the project state and financial state, and other data to the information publication computer 110 and the insurance computer 120.

The securities 10 are not limited to the projects of the construction and management of large-scale structures, such as concrete structures and social infrastructures, and may be applied to projects such as drug discovery and software development.

The security 10 may also be used to raise funds for projects for social insurance (medical insurance (health insurance, seamen's insurance, daily employment health insurance, self-defense officer medical certificate, mutual aid association, national health insurance, late-stage elderly medical system), pension insurance (national pension, employees' pension), nursing care insurance, unemployment insurance, and worker accident compensation insurance), which is the social security that prepares for various concerns and risks that the people face in their daily lives. Furthermore, the security 10 may be used to raise funds for projects of private insurance such as medical insurance and life insurance.

The data processing system is not limited to a device that includes the CPU 31 and the ROM 32 and executes software processing. For example, a dedicated hardware circuit (such as an application-specific integrated circuit (ASIC)) may be provided that executes at least part of the software processing executed in each of the above-described embodiments. That is, the data processing system may be modified as long as it has any one of the following configurations (a) to (c). (a) A configuration including a processor that executes all of the above-described processes according to programs and a program storage device such as a ROM that stores the programs. (b) A configuration including a processor and a program storage device that execute part of the above-described processes according to the programs and a dedicated hardware circuit that executes the remaining processes. (c) A configuration including a dedicated hardware circuit that executes all of the above-described processes. Multiple software processing devices each including a processor and a program storage device and multiple dedicated hardware circuits may be provided. That is, the above processes may be executed in any manner as long as the processes are executed by processing circuitry that includes at least one of a set of one or more software processing devices and a set of one or more dedicated hardware circuits. The program storage device, which is a computer-readable medium, includes any type of media that are accessible by general-purpose computers and dedicated computers. The programs may be stored in a non-transitory computer-readable medium. When executed by a computer, the programs may cause the computer to execute procedures.

### DESCRIPTION OF THE REFERENCE NUMERALS

30...Management System; 41 ... Information Publication Unit; 42... Survey Unit; 43...Securities Issuing Unit; 44...Securities Management Unit; 45 Security Holders Management Unit; 45a...Table; 45b...Table; 45c...Table; 46...Calculation Unit; 47...Payment Determination Unit; 50... Investor Computer; 60... Project Operator Computer; 60a...Authentication Program; 61 ... Progress Management Database; 70... Comprehensive Management Computer; 70a...Authentication Program; 80...Certification Organication Computer; 80a...Authentication Program; 100...Security Issuance Management Computer; 100a...Authentication Program; 110...Information Publication Computer; 110a...Authentication Program; 120...Insurance Computer; 120a...Authentication Program

## Claims

1. A data processing system for calculating an insurance premium of an insurance policy that is obtained by a security holder of a security for acquiring funds for a project, wherein
the security includes:
a content of the project;
an issuing entity that issues the security;
a face value to be paid to the issuing entity in exchange for possession of the security;
a guaranteed rate that specifies an amount to be returned to the security holder by at least one third party involved in issuance of the security when the issuing entity becomes unable to pay interest and/or defaults, wherein the guaranteed rate is expressed as a proportion relative to the face value;
an interest rate that specifies interest to be paid periodically to the security holder, wherein the interest rate is expressed as a proportion relative to the face value or to a guaranteed portion that is guaranteed with the guaranteed rate; and
a dividend that is to be distributed to the security holder after the project funded through the security begins to create profit, wherein the dividend is at least a portion of the profit and paid on a non-guaranteed portion other than the guaranteed portion, and
the insurance policy includes an insurance policy for the non-guaranteed portion of the security,
the data processing system comprising:
a calculation unit configured to perform a process of calculating the insurance premium to be borne by the security holder according to a risk that the issuing entity becomes unable to pay interest and/or defaults, wherein the calculation unit is configured to collect at least a portion of the interest or the dividend as the insurance premium; and
a payment determination unit configured to determine whether the issuing entity has become unable to pay interest and/or defaulted and to pay insurance proceeds to the security holder when the issuing entity has become unable to pay interest and/or defaulted.

2. The data processing system according to claim 1, wherein
the security is one of securities each issued for one of a plurality of projects, and
the insurance policy is an insurance policy for a group of the securities and pays, when the issuing entity of a security of the securities becomes unable to pay interest and/or defaults, insurance proceeds to the security holder of the security.

3. The data processing system according to claim 1, further comprising an information publication unit configured to publish a project plan of the project for which funds are acquired by issuing the security on a web page before the security is issued, wherein
the information publication unit is configured to perform a process of managing a number of views of the web page or a viewing time in which the web page is viewed, and
the calculation unit is configured to perform a process of setting the insurance premium lower when the number of views is greater or when the viewing time is longer.

4. The data processing system according to claim 3, wherein
the information publication unit is configured to publish a project state on the web page at predetermined periods after the security is issued,
the number of views of the web page or the viewing time in which the web page is viewed is managed at the predetermined periods, and
the calculation unit is configured to perform a process of setting the insurance premium lower when the number of views is greater or when the viewing time is longer.

5. The data processing system according to claim 3 or 4, wherein
the calculation unit has a table that associates the number of views or the viewing time with a factor for calculating the insurance premium, and
the factor is set such that the insurance premium is lower when the number of views is greater or the viewing time is longer.

6. The data processing system according to claim 1, further comprising:
an information publication unit configured to publish a project plan of the project for which funds are acquired by issuing the security on a web page before the security is issued; and
a survey unit configured to perform a process of conducting a survey on approval or disapproval of the project plan on the web page,
wherein the calculation unit is configured to perform a process of setting the insurance premium lower when a number of positive responses to the project plan is greater or when the project plan has a higher reputation.

7. The data processing system according to claim 6, wherein
the information publication unit is configured to publish a project state on the web page at predetermined periods after the security is issued,
the survey unit is configured to perform a process of conducting a survey on reputation of the project on the web page at predetermined periods, and
the calculation unit is configured to perform a process of setting the insurance premium lower when the reputation is higher.

8. The data processing system according to claim 6 or 7, wherein
the calculation unit has a table that associates a result of the survey with a factor for calculating the insurance premium, and
the factor is set such that the insurance premium is lower when the number of positive responses or the reputation is higher.

9. The data processing system according to claim 3 or 6, wherein the calculation unit is configured to, when the project plan is created based on a plan proposal content of a proposal created by a party that has tendered for the project through proposal competitive bidding, perform a process of multiplying by a factor that sets the insurance premium lower.

10. The data processing system according to any one of claims 3 to 9, further comprising a project operator computer, wherein
the project operator computer is configured to assign a first hash value of a data file relating to the project, and
the information publication unit is configured to calculate a second hash value of the data file, compare the first hash value with the second hash value, and publish information in the data file when the first and second hash values agree with each other.

11. The data processing system according to any one of claims 3 to 5, further comprising a comprehensive information management unit, wherein
the information publication unit is configured to assign an electronic signature to data including the number of views or the viewing time and provide the data to the comprehensive information management unit, and
the comprehensive information management unit is configured to provide the data including the number of views or the viewing time to the calculation unit to calculate the insurance premium.

12. The data processing system according to any one of claims 6 to 8, further comprising a comprehensive information management unit, wherein
the information publication unit is configured to assign an electronic signature to data including a result of the survey and provide the data to the comprehensive information management unit, and
the comprehensive information management unit is configured to provide the data including the result of the survey to the calculation unit to calculate the insurance premium.

13. The data processing system according to claim 9, further comprising a comprehensive information management unit, wherein
a project operator computer is configured to assign an electronic signature to data including information on bidding and provide the data to the comprehensive information management unit, and
the comprehensive information management unit is configured to provide the data including the information on the bidding to the calculation unit to calculate the insurance premium.

14. The data processing system according to claim 1, wherein the insurance premium and information used to calculate the insurance premium are stored in a blockchain.

15. The data processing system according to claim 14, wherein the information used to calculate the insurance premium includes a project plan of the project for which funds are acquired by issuing the security, a project state, a number of views or a viewing time of a web page that publishes the project plan or the project state, a result of a survey on approval or disapproval of the project plan, and a result of a survey on reputation of the project.

16. A data processing method for calculating an insurance premium of an insurance policy that is obtained by a security holder of a security for acquiring funds for a project, wherein
the security includes:
a content of the project;
an issuing entity that issues the security;
a face value to be paid to the issuing entity in exchange for possession of the security;
a guaranteed rate that specifies an amount to be returned to the security holder by at least one third party involved in issuance of the security when the issuing entity becomes unable to pay interest and/or defaults, wherein the guaranteed rate is expressed as a proportion relative to the face value;
an interest rate that specifies interest to be paid periodically to the security holder, wherein the interest rate is expressed as a proportion relative to the face value or to a guaranteed portion that is guaranteed with the guaranteed rate; and
a dividend that is to be distributed to the security holder after the project funded through the security begins to create profit, wherein the dividend is at least a portion of the profit and paid on a non-guaranteed portion other than the guaranteed portion, and
the insurance policy includes an insurance policy for the non-guaranteed portion of the security,
the data processing method comprising:
performing, with a calculation unit, a process of calculating the insurance premium to be borne by the security holder according to a risk that the issuing entity becomes unable to pay interest and/or defaults and performing a process of collecting at least a portion of the interest or the dividend as the insurance premium; and
performing, with a payment determination unit, a process of determining whether the issuing entity has become unable to pay interest and/or defaulted and performing a process of paying insurance proceeds to the security holder when the issuing entity has become unable to pay interest and/or defaulted.

17. A program for causing a computer to perform a data processing method for calculating an insurance premium of an insurance policy that is obtained by a security holder of a security for acquiring funds for a project, wherein
the security includes:
a content of the project;
an issuing entity that issues the security;
a face value to be paid to the issuing entity in exchange for possession of the security;
a guaranteed rate that specifies an amount to be returned to the security holder by at least one third party involved in issuance of the security when the issuing entity becomes unable to pay interest and/or defaults, wherein the guaranteed rate is expressed as a proportion relative to the face value;
an interest rate that specifies interest to be paid periodically to the security holder, wherein the interest rate is expressed as a proportion relative to the face value or to a guaranteed portion that is guaranteed with the guaranteed rate; and
a dividend that is to be distributed to the security holder after the project funded through the security begins to create profit, wherein the dividend is at least a portion of the profit and paid on a non-guaranteed portion other than the guaranteed portion, and
the insurance policy includes an insurance policy for the non-guaranteed portion of the security,
the program for causing the computer to perform procedures comprising:
performing, with a calculation unit, a process of calculating the insurance premium to be borne by the security holder according to a risk that the issuing entity becomes unable to pay interest and/or defaults and performing a process of collecting at least a portion of the interest or the dividend as the insurance premium; and
performing, with a payment determination unit, a process of determining whether the issuing entity has become unable to pay interest and/or defaulted and performing a process of paying insurance proceeds to the security holder when the issuing entity has become unable to pay interest and/or defaulted.

18. A data processing system for calculating an insurance premium of an insurance policy that is obtained by a guarantor that pays a guaranteed portion to a security holder according to a guaranteed rate of a security for acquiring funds for a project, wherein
the security includes:
a content of the project;
an issuing entity that issues the security;
a face value to be paid to the issuing entity in exchange for possession of the security;
a guaranteed rate that specifies an amount to be returned to the security holder by at least one third party involved in issuance of the security when the issuing entity becomes unable to pay interest and/or defaults, wherein the guaranteed rate is expressed as a proportion relative to the face value;
an interest rate that specifies interest to be paid periodically to the security holder, wherein the interest rate is expressed as a proportion relative to the face value or to a guaranteed portion that is guaranteed with the guaranteed rate; and
a dividend that is to be distributed to the security holder after the project funded through the security begins to create profit, wherein the dividend is at least a portion of the profit and paid on a non-guaranteed portion other than the guaranteed portion, and
the insurance policy includes an insurance policy for payment of guaranteed money calculated with the guaranteed rate,
the data processing system comprising:
a calculation unit configured to perform a process of calculating the insurance premium to be borne by the guarantor according to a risk that the issuing entity becomes unable to pay interest and/or defaults; and
a payment determination unit configured to determine whether the issuing entity has become unable to pay interest and/or defaulted and to pay insurance proceeds to the guarantor when the issuing entity has become unable to pay interest and/or defaulted.

19. A data processing method for calculating an insurance premium of an insurance policy that is obtained by a guarantor that pays a guaranteed portion to a security holder according to a guaranteed rate of a security for acquiring funds for a project, wherein
the security includes:
a content of the project;
an issuing entity that issues the security;
a face value to be paid to the issuing entity in exchange for possession of the security;
a guaranteed rate that specifies an amount to be returned to the security holder by at least one third party involved in issuance of the security when the issuing entity becomes unable to pay interest and/or defaults, wherein the guaranteed rate is expressed as a proportion relative to the face value;
an interest rate that specifies interest to be paid periodically to the security holder, wherein the interest rate is expressed as a proportion relative to the face value or to a guaranteed portion that is guaranteed with the guaranteed rate; and
a dividend that is to be distributed to the security holder after the project funded through the security begins to create profit, wherein the dividend is at least a portion of the profit and paid on a non-guaranteed portion other than the guaranteed portion, and
the insurance policy includes an insurance policy for payment of guaranteed money calculated with the guaranteed rate,
the data processing method comprising:
performing, with a calculation unit, a process of calculating the insurance premium to be borne by the guarantor according to a risk that the issuing entity becomes unable to pay interest and/or defaults; and
performing, with a payment determination unit, a process of determining whether the issuing entity has become unable to pay interest and/or defaulted and performing a process of paying insurance proceeds to the guarantor when the issuing entity has become unable to pay interest and/or defaulted.

20. A program for causing a computer to perform a data processing method for calculating an insurance premium of an insurance policy that is obtained by a guarantor that pays a guaranteed portion to a security holder according to a guaranteed rate of a security for acquiring funds for a project, wherein
the security includes:
a content of the project;
an issuing entity that issues the security;
a face value to be paid to the issuing entity in exchange for possession of the security;
a guaranteed rate that specifies an amount to be returned to the security holder by at least one third party involved in issuance of the security when the issuing entity becomes unable to pay interest and/or defaults, wherein the guaranteed rate is expressed as a proportion relative to the face value;
an interest rate that specifies interest to be paid periodically to the security holder, wherein the interest rate is expressed as a proportion relative to the face value or to a guaranteed portion that is guaranteed with the guaranteed rate; and
a dividend that is to be distributed to the security holder after the project funded through the security begins to create profit, wherein the dividend is at least a portion of the profit and paid on a non-guaranteed portion other than the guaranteed portion, and
the insurance policy includes an insurance policy for payment of guaranteed money calculated with the guaranteed rate,
the program for causing the computer to perform procedures comprising:
performing, with a calculation unit, a process of calculating the insurance premium to be borne by the guarantor according to a risk that the issuing entity becomes unable to pay interest and/or defaults; and
performing, with a payment determination unit, a process of determining whether the issuing entity has become unable to pay interest and/or defaulted and performing a process of paying insurance proceeds to the guarantor when the issuing entity has become unable to pay interest and/or defaulted.

21. A data processing system for calculating an insurance premium of an insurance policy that is obtained by a project operator of a project for which funds are acquired through a security, wherein
the security includes:
a content of the project;
an issuing entity that issues the security;
a face value to be paid to the issuing entity in exchange for possession of the security;
a guaranteed rate that specifies an amount to be returned to the security holder by at least one third party involved in issuance of the security when the issuing entity becomes unable to pay interest and/or defaults, wherein the guaranteed rate is expressed as a proportion relative to the face value;
an interest rate that specifies interest to be paid periodically to the security holder, wherein the interest rate is expressed as a proportion relative to the face value or to a guaranteed portion that is guaranteed with the guaranteed rate; and
a dividend that is to be distributed to the security holder after the project funded through the security begins to create profit, wherein the dividend is at least a portion of the profit and paid on a non-guaranteed portion other than the guaranteed portion, and
the insurance policy includes an insurance policy that guarantees a profit to the project operator,
the data processing system comprising:
a calculation unit configured to perform a process of calculating the insurance premium to be borne by the project operator according to a risk that the issuing entity becomes unable to pay interest and/or defaults or a risk that an expected profit is not obtained; and
a payment determination unit configured to determine whether the issuing entity has become unable to pay interest and/or defaulted or whether the expected profit has been obtained, and to pay insurance proceeds to the project operator when the issuing entity has become unable to pay interest and/or defaulted or when the expected profit has not been obtained.

22. A data processing method for calculating an insurance premium of an insurance policy that is obtained by a project operator of a project for which funds are acquired through a security, wherein
the security includes:
a content of the project;
an issuing entity that issues the security;
a face value to be paid to the issuing entity in exchange for possession of the security;
a guaranteed rate that specifies an amount to be returned to the security holder by at least one third party involved in issuance of the security when the issuing entity becomes unable to pay interest and/or defaults, wherein the guaranteed rate is expressed as a proportion relative to the face value;
an interest rate that specifies interest to be paid periodically to the security holder, wherein the interest rate is expressed as a proportion relative to the face value or to a guaranteed portion that is guaranteed with the guaranteed rate; and
a dividend that is to be distributed to the security holder after the project funded through the security begins to create profit, wherein the dividend is at least a portion of the profit and paid on a non-guaranteed portion other than the guaranteed portion, and
the insurance policy includes an insurance policy that guarantees a profit to the project operator,
the data processing method comprising:
performing, with a calculation unit, a process of calculating the insurance premium to be borne by the project operator according to a risk that the issuing entity becomes unable to pay interest and/or defaults or a risk that an expected profit is not obtained; and
performing, with a payment determination unit, a process of determining whether the issuing entity has become unable to pay interest and/or defaulted or whether the expected profit has been obtained, and paying insurance proceeds to the project operator when the issuing entity has become unable to pay interest and/or defaulted or when the expected profit has not been obtained.

23. A program for causing a computer to perform a data processing method for calculating an insurance premium of an insurance policy that is obtained by a project operator of a project for which funds are acquired through a security, wherein
the security includes:
a content of the project;
an issuing entity that issues the security;
a face value to be paid to the issuing entity in exchange for possession of the security;
a guaranteed rate that specifies an amount to be returned to the security holder by at least one third party involved in issuance of the security when the issuing entity becomes unable to pay interest and/or defaults, wherein the guaranteed rate is expressed as a proportion relative to the face value;
an interest rate that specifies interest to be paid periodically to the security holder, wherein the interest rate is expressed as a proportion relative to the face value or to a guaranteed portion that is guaranteed with the guaranteed rate; and
a dividend that is to be distributed to the security holder after the project funded through the security begins to create profit, wherein the dividend is at least a portion of the profit and paid on a non-guaranteed portion other than the guaranteed portion, and
the insurance policy includes an insurance policy that guarantees a profit to the project operator,
the program for causing the computer to perform procedures comprising:
performing, with a calculation unit, a process of calculating the insurance premium to be borne by the project operator according to a risk that the issuing entity becomes unable to pay interest and/or defaults or a risk that an expected profit is not obtained; and
performing, with a payment determination unit, a process of determining whether the issuing entity has become unable to pay interest and/or defaulted or whether the expected profit has been obtained, and paying insurance proceeds to the project operator when the issuing entity has become unable to pay interest and/or defaulted or when the expected profit has not been obtained.
